# EUROPEAN PATENT SPECIFICATION

(11) **EP 4 019 883 B1**
(45) Date of publication and mention of the grant of the patent: **02.04.2025**
(21) Application number: 20854798.4
(22) Date of filing: 17.08.2020
(51) Int. Cl.: F28F 21/00, B32B 5/18, B32B 27/18, B32B 27/28, F24F 7/08, F28F 3/08, F28D 21/00, F28F 19/02

(54) **SHEET FOR HEAT EXCHANGE ELEMENT**
FOLIE FÜR WÄRMETAUSCHELEMENT
FEUILLE POUR ÉLÉMENT D'ÉCHANGE DE CHALEUR

(30) Priority: 20.08.2019 JP 2019150262
(43) Date of publication of application: 29.06.2022
(73) Proprietor: Toray Industries, Inc., Tokyo 103-8666 (JP)
(72) Inventor: NISHIOKA, Kazuya, Otsu-shi, Shiga 520-2141 (JP); OMORI, Taira, Otsu-shi, Shiga 520-2141 (JP)
(74) Representative: Mewburn Ellis LLP
(86) International application number: PCT/JP2020/030960
(87) International publication number: WO 2021/033658

(56) References cited:
- CA-A1- 3 084 922
- CN-A- 101 568 793
- JP-A- 2003 166 155
- JP-A- 2006 001 852
- JP-A- 2016 029 226
- JP-A- 2017 020 779
- JP-A- 2017 020 779
- JP-A- 2017 179 613
- JP-A- 2018 030 805
- US-B1- 6 571 864

## Description

### TECHNICAL FIELD

The present invention relates to a heat exchange element sheet. In particular, it relates to a heat exchange element sheet as defined in the preamble of claim 1, and as illustrated in JP2017 020 779.

### BACKGROUND ART

Heat exchangers are attracting attention as energy-saving members of ventilation units in houses and buildings. A heat exchanger is composed mainly of a pipe for air transport between interior and exterior, a heat exchange element, and a blower. In the heat exchange element, heat and humidity in the air released from the inside to the outside of a room is transferred to the air supplied from the outside to the room before taking in the air into the room. A heat exchange element is composed mainly of two heat exchange element sheets, namely, a liner sheet and a corrugated sheet. In particular, the liner sheet is required to have high heat transferability, water vapor permeability, and gas barrier property in order to provide a heat exchange element having improved temperature exchange efficiency, humidity exchange efficiency, and effective ventilation rate, and active studies are being conducted aiming to ensure high performance.

In recent years, heat exchange element sheets are required to have a function to suppress the growth of fungi (hereinafter the function to suppress the growth of fungi is occasionally referred to as fungus resistance) in order to ensure that the air supplied to a room through the heat exchangers is kept clean. To produce a heat exchange element sheet with fungus resistance, known methods include impregnating a sheet of paper, which is a wet-laid nonwoven fabric, with a fungicide (Patent document 1) and adding an inorganic antibacterial agent to a pulp slurry, followed by processing it by a papermaking method to produce a sheet of paper, which is a wet-laid nonwoven fabric, that serves as a heat exchange element sheet (Patent document 2).

Another known example is a heat exchange element sheet with excellent gas barrier property, heat transferability, and water vapor permeability that is produced by forming a hydrophilic resin film on one side of a porous film (Patent document 3). The hydrophilic resin film described above has the function to impart gas barrier property to a heat exchange element sheet to permit the permeation of water vapor and therefore, the aforementioned heat exchange element sheet has excellent gas barrier property and water vapor permeability. Patent documents 3 and 4 disclose further heat exchange sheets, and Patent document 5 discloses an aluminium fin material for a heat exchanger.

### PRIOR ART DOCUMENTS

### PATENT DOCUMENTS

Patent document 1: JP 2016-29226 A; Patent document 2: JP 2012-16645 A; Patent document 3: JP 2017-020779 A; Patent document 4: JP 2017-020779 A; Patent Document 5: CA 3 084 922 A1; Patent Document 6: CN 101 568 793 A

### SUMMARY OF INVENTION

### PROBLEMS TO BE SOLVED BY THE INVENTION

The heat exchange element sheets described in Patent documents 1 and 2 contain a fungicide or antibacterial agent and therefore, these heat exchange element sheets are high in fungus resistance. However, the heat exchange element sheets described in Patent documents 1 and 2 have a disadvantage of insufficient gas barrier property due to the use of paper, which is a wet-laid nonwoven fabric, as base material. Furthermore, these heat exchange element sheets use paper as base material and such paper used as base material is low in water resistance. When heat exchange elements containing these heat exchange element sheets are used under high humidity conditions, therefore, there will occur problems such as the inability of the heat exchange elements to maintain their shape because the heat exchange element sheets become soft due to moisture. Thus, these heat exchange element sheets have disadvantages such as inferiority in gas barrier property and shape retainability.

As compared with this, the heat exchange element sheet described in Patent document 3 adopts a porous resin film as base material and the pores in the porous film used as base material are covered with a hydrophilic resin film to achieve high gas barrier property. In addition, as the aforementioned hydrophilic resin film can transmit water vapor, as described above, this heat exchange element sheet is high in water vapor permeability. Containing a porous resin film as base material, furthermore, this heat exchange element sheet is high in water resistance and therefore, a heat exchange element containing the heat exchange element sheet is resistant to shape deformation even when used under high humidity conditions. On the other hand, however, the heat exchange element sheet proposed in Patent document 3 has the problem of low fungus resistance.

Thus, in view of the above circumstances, the main object of the present invention is to provide a heat exchange element sheet that has not only good gas barrier property and shape retainability but also high fungus resistance.

### MEANS OF SOLVING THE PROBLEMS

The present invention has the following features to solve such problems. Specifically, it provides:
a heat exchange element sheet of a layered structure containing a porous base material and a resin layer, the heat exchange element sheet having a first face and a second face,
the outermost layer at the first face of the heat exchange element sheet being a resin layer, the resin layer containing polyvinyl pyrrolidone and/or a vinyl pyrrolidone copolymer, and the resin layer containing a fungicide. In the heat exchange element sheet, the fungicide is a solid material, the fungicide is in the form of particles, the fungicide particles having diameters of 10 nm or more and 10,000 nm or less, measured as set out in claim 1, and wherein a ratio between the diameter of the fungicide and a thickness of the resin layer, measured as set out in claim 1, (diameter of fungicide / thickness of resin layer) is 0.5 to 10.

In some embodiments of the heat exchange element sheet, the fungicide is exposed at the first face.

In some embodiments of the heat exchange element sheet, the fungicide contains one or more selected from the group consisting of pyrithione based compounds, benzoimidazole based compounds, and silver based inorganic substances.

In some embodiments of the heat exchange element sheet, the fungicide accounts for 0.5 mass% or more and 30 mass% or less of the total mass of the resin layer and has a weight of 0.0005 g/m² or more and 0.9 g/m² or less.

The invention also provides a production method for a heat exchange element sheet as set forth herein, comprising a step for coating either of the faces of the porous base material with a coating liquid to form a coating film and a step for drying the coating film, which are carried out in this order, the coating liquid containing polyvinyl pyrrolidone and/or a vinyl pyrrolidone copolymer, and the coating liquid containing a fungicide.

The invention also provides a heat exchange element using a heat exchange element sheet as set forth herein.

The invention also provides a heat exchanger using a heat exchange element as set forth herein.

### ADVANTAGEOUS EFFECTS OF THE INVENTION

In view of the above circumstances, the present invention can provide a heat exchange element sheet that has not only good gas barrier property and shape retainability but also high fungus resistance.

### BRIEF DESCRIPTION OF THE DRAWINGS

[Fig. 1] This is a schematic diagram showing a cross section of the heat exchange element sheet according to the first embodiment of the present invention.
[Fig. 2] This is a conceptual diagram showing a cross section of the heat exchange element sheet according to the second embodiment of the present invention.
[Fig. 3] This is a conceptual diagram showing a cross section of the heat exchange element sheet according to the third embodiment of the present invention.

### DESCRIPTION OF PREFERRED EMBODIMENTS

The heat exchange element sheet according to the present invention will be described in detail below.

### [Heat exchange element sheet]

The heat exchange element sheet according to the present invention has a layered structure containing a porous base material and a resin layer. Furthermore, this heat exchange element sheet has a first face and a second face wherein the outermost layer at the first face of the heat exchange element sheet is a resin layer. In addition, the resin layer contains polyvinyl pyrrolidone and/or a vinyl pyrrolidone copolymer and also contains a fungicide. It is noted that hereinafter such polyvinyl pyrrolidone and/or a vinyl pyrrolidone copolymer will be occasionally referred to as polyvinyl pyrrolidone or the like.

Here, in the heat exchange element sheet according to the present invention, the pores existing in the porous base material are covered with a resin layer and this allows this heat exchange element sheet to have good gas barrier property. Accordingly, in a heat exchange element that uses the heat exchange element sheet according to the present invention, the air being supplied and the air being discharged are separated completely.

In the heat exchange element sheet according to the present invention, furthermore, the resin layer that covers the pores in the porous base material contains polyvinyl pyrrolidone or the like, which are hygroscopic polymers, to allow water vapor to move from either face to the other face of this resin layer. As a result of this, the heat exchange element sheet according to the present invention has high water vapor permeability.

In addition, the outermost layer at the first face of the heat exchange element sheet is a resin layer and furthermore, this resin layer contains a fungicide. As a result of this, the effective components released slowly from the fungicide, which is designed to depress the growth of fungi (hereinafter, the effective components that act to depress the growth of fungi are simply referred to as effective components) diffuse to the first face of the heat exchange element sheet to allow the heat exchange element sheet according to the present invention to develop fungus resistance.

For the present invention, furthermore, it is preferable for the fungicide to be exposed at the first face of the heat exchange element sheet. Here, the first face of the heat exchange element sheet according to the present invention has a resin layer. Here, as the fungicide is exposed at the first face of the heat exchange element sheet, the effective components can spread efficiently along the first face so that they finally diffuse all over the first face. As a result of this, the heat exchange element sheet can develop a higher fungus resistance.

Since the fungicide contained in the resin layer that is the outermost layer existing at the first face of the heat exchange element sheet is a solid material, furthermore, an uneven surface will be formed easily at the first face of the heat exchange element sheet. Then, if the first face has unevenness, it serves to prevent the blocking between adjacent heat exchange element sheet plies when a heat exchange element sheet is put on another heat exchange element sheet or when a heat exchange element sheet is wound up into a roll.

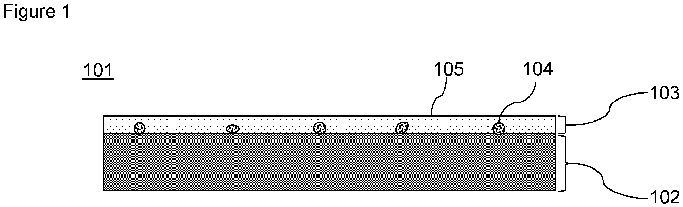

The constitution of the present invention is described below with reference to drawings. Fig. 1 is a schematic diagram showing a cross section of the heat exchange element sheet according to the first embodiment of the present invention. This heat exchange element sheet 101 has a porous base material 102 and a resin layer 103 that contains a solid type fungicide 104. The effective components released slowly from this solid type fungicide 104 diffuses through the resin layer 103 and reaches the first face 105 of the heat exchange element sheet to allow the heat exchange element sheet to develop fungus resistance.

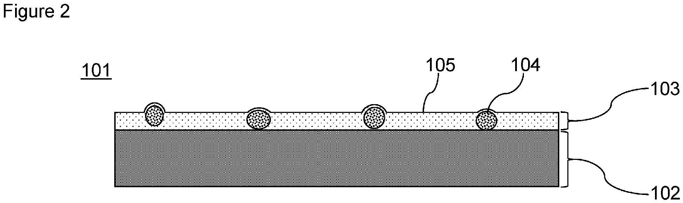

The heat exchange element sheet shown in the Fig. 2 will be described below. Fig. 2 is a schematic diagram showing a cross section of the heat exchange element sheet according to the second embodiment of the present invention. In the heat exchange element sheet 101 shown in the Fig. 2, particles of a solid type fungicide 104 are located near the first face of the heat exchange element sheet 105. If a fungicide is located near the first face 105 of the heat exchange element sheet in this way, the effective components released slowly from the solid type fungicide 104 diffuses through the resin layer 103 and reaches the first face 105 of the heat exchange element sheet in a relatively short time. As a result of this, the heat exchange element sheet can develop a higher fungus resistance.

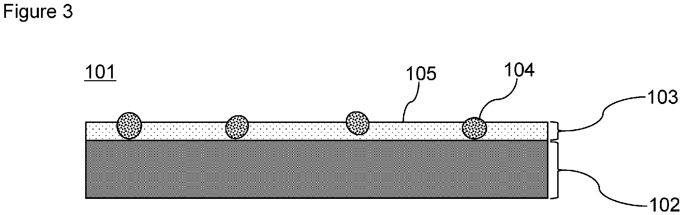

The heat exchange element sheet shown in the Fig. 3 will be described below. Fig. 3 is a schematic diagram showing a cross section of the heat exchange element sheet according to the third embodiment of the present invention. In the heat exchange element sheet 101 shown in the Fig. 3, part of the solid type fungicide particles 104 are held in the resin layer 103 in such a manner that they are exposed at the first face 105 of the heat exchange element sheet. Then, the effective components are released slowly from the solid type fungicide 104 held in the resin layer 103 in the aforementioned manner and reach the first face 105 of the heat exchange element sheet in a shorter time than in the heat exchange element sheet shown in the Fig. 2. Then, the effective components reaching the first face 105 of the heat exchange element sheet quickly diffuse along the surface of the first face 105 to cover the entire first face 105. This allows the heat exchange element sheet to develop a still higher fungus resistance.

It is preferable for the thickness of the heat exchange element sheet to be as small as possible from the viewpoint of its temperature exchange efficiency and the pressure loss in a heat exchange element produced thereof. On the other hand, it is preferable for the heat exchange element sheet to have at least a certain degree of thickness in order to permit the production of a high-strength heat exchange element or ensure improved handleability in producing a heat exchange element. For the above reasons, it is preferable for the thickness of the heat exchange element sheet to be 5 µm or more, more preferably 9 µm or more. On the other hand, it is preferable for the thickness of the heat exchange element sheet to be 30 µm or less, more preferably 15 µm or less.

It is preferable for the area density of the heat exchange element sheet to be 3 g/m² or more, more preferably 5 g/m² or more. On the other hand, it is preferable for the area density of the heat exchange element sheet to be 15 g/m² or less, more preferably 10 g/m² or less. If the heat exchange element sheet has an area density not more than the aforementioned upper limit, it serves to reduce the required thickness of the heat exchange element sheet, leading to improved heat and humidity exchange efficiency. On the other hand, if the heat exchange element sheet has an area density not less than the aforementioned lower limit, it serves to allow the heat exchange element sheet to maintain enough strength to resist the heat and tension applied during processing for corrugation etc. performed in the step for molding the heat exchange element sheet into a heat exchange element.

The outermost layer at the second face of the heat exchange element sheet may also be a resin layer and in this case, the resin layer adopted as outermost layer at the second face may be the same as the resin layer adopted as outermost layer at the first face of the heat exchange element sheet according to the present invention.

In order to ensure a high productivity in producing the heat exchange element sheet and ensure that the resulting heat exchange element sheet has high water vapor permeability, it is preferable for the heat exchange element sheet according to the present invention to have a resin layer only as the outermost layer at the first face of the heat exchange element sheet and it is more preferable to have a two layer structure composed of a resin layer and a porous base material.

### [Porous base material]

It is preferable for the porous base material used for the present invention to be high in air permeability and water vapor permeability and have a large number of fine through-holes. A porous base material made mainly of a polymer resin is generally preferred because such a material is unlikely to suffer a significant decrease in strength or likely to decrease in thickness when used in a high humidity environment. There are no specific limitations on the polymer resin that constitutes the porous base material, but good examples include polyolefin resins, polycarbonate, polyamide, polyimide, polyamide-imide, aromatic polyamide, and fluorine based resin. The use of a polyolefin resin is preferred in terms of production cost and availability. Good monomer components used to constitute such polyolefin resins include, for example, ethylene, propylene, 1-butene, 1-pentene, 3-methyl-1-pentene, 3-methyl-1-butene, 1-hexene, 4-methyl-1-pentene, 5-ethyl-1-hexene, 1-heptene, 1-octene, 1-decene, 1-dodecene, 1-tetradecene, 1-hexadecene, 1-heptadecene, 1-octadecene, 1-eicosene, vinyl cyclohexene, styrene, allyl benzene, cyclopentene, norbornene, and 5-methyl-2-norbornene. They may be used in various forms including, but not limited to, a homopolymer, a copolymer of at least two selected from these monomer components, and a blend of these homopolymers and copolymers. Besides the above monomer components, other components such as vinyl alcohol and maleic anhydride may be copolymerized with them.

For the porous base material, in particular, the monomer component used to constitute the above resin is preferably one or more selected from the group consisting of ethylene and propylene from the viewpoint of adjustment of porosity and pore diameter, film producibility, production cost reduction, etc.

It is preferable for the porous base material to have an area density of 15 g/m² or less, more preferably 10 g/m² or less, and still more preferably 7 g/m² or less, whereas it is preferably 1 g/m² or more, more preferably 3 g/m² or more, and still more preferably 5 g/m² or more. If the porous base material has an area density not more than the aforementioned upper limit, it works to reduce the required thickness of the porous base material, serving to form a heat exchange element sheet having an improved heat and humidity exchange efficiency. On the other hand, if the porous base material has an area density not less than the aforementioned lower limit, it serves to maintain enough strength to resist the heat and tension applied during coating performed in the coating liquid application step or during processing for corrugation etc. performed in the step for molding the heat exchange element sheet into a heat exchange element.

It is preferable for the porous base material to have a thickness of 30 µm or less, more preferably 20 µm or less, and still more preferably 15 µm or less, whereas it is preferably 2 µm or more, more preferably 5 µm or more, and still more preferably 10 µm or more. If the porous base material has a thickness not more than the aforementioned upper limit, it serves to form a heat exchange element sheet having an improved heat and humidity exchange efficiency. On the other hand, if the porous base material has a thickness of not less than the aforementioned lower limit, it serves to maintain enough strength to resist the heat and tension applied during the application of a coating liquid over the first face of the porous base material or during the processing for corrugation etc. performed in the step in which a heat exchange element sheet containing the porous base material is molded into a heat exchange element.

It is preferable for the porous base material to have a density of 0.2 g/cm³ or more, more preferably 0.3 g/cm³ or more, and still more preferably 0.4 g/cm³ or more. On the other hand, the density is preferably 8.0 g/cm³ or less, more preferably 7.0 g/cm³ or less, and still more preferably 6.0 g/cm³ or less. The density of the porous base material has a large influence on the water vapor permeability of the heat exchange element sheet, and controlling the density at a value not more than the aforementioned upper limit serves to allow the heat exchange element sheet to have a higher water vapor permeability. On the other hand, if the density is controlled at a value not less than the aforementioned lower limit, it serves to maintain enough strength to resist the heat and tension applied during coating performed in the coating liquid application step or during processing for corrugation etc. performed in the step for molding the heat exchange element sheet into a heat exchange element.

It is preferable for the porous base material to have a porosity of 20% or more, more preferably 30% or more, and still more preferably 40% or more. It is generally thought that the porosity of a porous base material has a correlation with its water vapor permeability and more specifically, as the porosity increases, the porous base material increases in water vapor permeability and serves to produce a heat exchange element sheet having an increased water vapor permeability.

It is preferable for the porous base material to have a pore diameter of 20 nm or more, more preferably 30 nm or more, and still more preferably 40 nm or more. On the other hand, the pore diameter is preferably 100 µm or less, more preferably 80 µm or less, and still more preferably 60 µm or less. It is generally thought that the pore diameter of a porous base material has a correlation with its water vapor permeability. If the pore diameter is not less than the aforementioned lower limit, the porous base material will have an increased water vapor permeability and the resulting heat exchange element sheet will also have an increased water vapor permeability. On the other hand, If the pore diameter is not more than the aforementioned upper limit, it serves to maintain enough strength to resist the heat and tension applied during coating performed in the coating liquid application step or during processing for corrugation etc. performed in the step for molding the heat exchange element sheet into a heat exchange element.

It is preferable for the porous base material to have an air permeability of 2,500 seconds/100 ml or less, more preferably 300 seconds/100 ml or less, and still more preferably 200 seconds/100 ml or less. It is generally thought that air permeability has a correlation with water vapor permeability and more specifically, the water vapor permeability of a heat exchange element sheet increases as the air permeability of the porous base material decreases.

It is preferable for the porous base material to have an air permeability of 80 g/m²/hr or more, more preferably 90 g/m²/hr or more, and still more preferably 100 g/m²/hr or more. The use of a porous base material with a higher water vapor permeability is preferred because it leads to a heat exchange element sheet with a higher water vapor permeability, and the use of such a heat exchange element sheet serves to produce a heat exchange element with a higher humidity exchange efficiency.

A film of a porous base material can be produced by using a generally known wet method or a generally known dry method.

The resin used to form a porous base material may contain various additives such as antioxidant, thermal stabilizer, photostabilizer, neutralization agent, antistatic agent, organic particle-based lubricant, antiblocking agent, filler, and incompatible polymer, unless they impair advantageous effects of the present invention. In particular, it is preferable to add an antioxidant with the aim of depressing oxidation degradation of polypropylene etc. that is attributed to heat history. In addition, the porous base material to be used may have a surface subjected to hydrophilizing treatment such as corona treatment, plasma treatment, surface active agent impregnation, and surface grafting, as required.

### [Resin layer]

The resin layer used for the present invention contains polyvinyl pyrrolidone or the like and a fungicide. In the resin layer used for the present invention, it is preferable for such polyvinyl pyrrolidone or the like to account for 50 mass% or more, more preferably 60 mass% or more, and particularly preferably 70 mass% or more, of the entire resin layer, whereas it preferably accounts for 99 mass% or less, more preferably 90 mass% or less, still more preferably 85 mass% or less, and particularly preferably 80 mass% or less. If the content of the polyvinyl pyrrolidone or the like is not less than the aforementioned lower limit, the heat exchange element sheet has a favorable water vapor permeability. If the content of the polyvinyl pyrrolidone or the like is not more than the aforementioned upper limit less, the heat exchange resin layer has a favorable water resistance. Here, in the case where the resin layer contains both polyvinyl pyrrolidone and a vinyl pyrrolidone copolymer, the aforementioned content refers to the total content of the polyvinyl pyrrolidone and vinyl pyrrolidone copolymer.

It is preferable for the resin layer used for the present invention to contain a fungicide having a content of 0.5 mass% or more and 30 mass% or less of the total mass of the resin layer and having a weight of 0.0005 g/m² or more and 0.9 g/m² or less. If the fungicide has a content of 0.5 mass% or more of the total mass of the resin layer and also has a weight of 0.0005 g/m² or more, it is preferable because it serves to develop high fungus resistance uniformly over the first face of the heat exchange element sheet. From this viewpoint, it is more preferable for the fungicide to have a content of 1.0 mass% or more and has a weight of 0.002 g/m² or more, and it is particularly preferable to have a content of 2.0 mass% or more and has a weight of 0.008 g/m² or more. On the other hand, it is preferable for the fungicide to account for 30 mass% or less of the total mass of the resin layer and has a weight of 0.9 g/m² or less, because it serves to allow the resin layer to cover the pores in the porous base material more completely. From this viewpoint, it is more preferable for the fungicide to have a content of 20 mass% or less and has a weight of 0.2 g/m² or less, and it is particularly preferable to have a content of 10 mass% or less and has a weight of 0.08 g/m² or less.

### (1) Polyvinyl pyrrolidone and/or vinyl pyrrolidone copolymer

If the resin layer used for the present invention contains polyvinyl pyrrolidone and/or a vinyl pyrrolidone copolymer, it allows the resin layer to have high hygroscopicity and allows a heat exchange element sheet carrying the resin layer thereon to have high water vapor permeability. In regard to hygroscopicity, it is preferable for the polyvinyl pyrrolidone or the like to have a water absorption rate of 10 mass% or more and 50 mass% or less, more preferably 15 mass% or more and 48 mass% or less, and particularly preferably 25 mass% or more and 45 mass% or less, at a temperature of 23°C and a humidity of 75% RH. If the water absorption rate is not less than the aforementioned lower limit, it serves to allow the resin layer to haver high hygroscopicity and permit the production of a heat exchange element sheet having high water vapor permeability. If the water absorption rate is not more than the aforementioned upper limit, it serves to prevent the resin layer from being swollen due to water absorption and permit the production of a heat exchange element sheet having high water resistance.

For the present invention, polyvinyl pyrrolidone is a polymer produced through polymerization of only N-vinyl pyrrolidone whereas a vinyl pyrrolidone copolymer is a polymer produced through copolymerization of N-vinyl pyrrolidone used as the main monomer and vinyl acetate, vinyl caprolactam, etc., used as comonomers. For the vinyl pyrrolidone copolymer, the type of comonomer and the content ratio (comonomer/main monomer) are not particularly limited unless the advantageous effects of the present invention are impaired, and suitable ones may be selected appropriately depending on the solubility in the solvent and the physical properties of the coating liquid. The molecular weight of the polyvinyl pyrrolidone or vinyl pyrrolidone copolymer is not particularly limited, but it is preferable for the polyvinyl pyrrolidone or vinyl pyrrolidone copolymer to have a weight average molecular weight of 1,000 or more and 600,000 or less, more preferably 60,000 or more and 500,000 or less, and particularly preferably 150,000 or more and 400,000 or less, because in these cases, they serve to prepare a coating liquid having a viscosity suitable to form a coating film with a uniform thickness when used to coat a porous base material. Examples of such polyvinyl pyrrolidone include products of the LuvitecK (registered trademark) series manufactured by BASF. Examples of such a vinyl pyrrolidone copolymer include products of the LuvitecVA (registered trademark) series and Luvicap (registered trademark) series.

In addition, it is preferable for the polyvinyl pyrrolidone or the like contained in the resin layer to be crosslinked at least partly. If the resin layer has the above constitution, the polyvinyl pyrrolidone or the like is prevented from being dissolved into water when it comes in contact with water, such as when the heat exchange element sheet is used under high humidity conditions or when the heat exchange element sheet is washed with water. Accordingly, the content of the polyvinyl pyrrolidone or the like contained in the resin layer used for present invention after coming in contact with water is little smaller than the content of the polyvinyl pyrrolidone or the like contained in the resin layer before coming in contact with water. As a result, the water vapor permeability of the heat exchange element sheet after coming into contact with water is little smaller than the water vapor permeability of the heat exchange element sheet before coming into contact with water, indicating that the heat exchange element sheet has high water resistance. In regard to the mechanism of the prevention of the polyvinyl pyrrolidone or the like from being dissolved into water, it is considered to be because the number of carbonyl groups that work to increase the water solubility of the polyvinyl pyrrolidone or the like is decreased as a result of the fact that the polyvinyl pyrrolidone or the like contained in the resin layer is crosslinked at least partly.

### (2) Fungicide

The resin layer used for the present invention contains a fungicide. As described in detail later, it is preferable for the fungicide to be a solid material. Here, a solid material as referred to above is a solid body that is insoluble in water and has a definite contour. Specifically, when mixing the solid material in water to prepare a liquid mixture with a concentration of 1 mass% and analyzing it by laser diffraction, it should cause scattering of laser light to allow the particle size to be determined. Here, a solid material is regarded as insoluble in water if only 0.01 g or less of it is dissolved when 1 g of it is put in 100 g of water at 25°C.

For the heat exchange element sheet according to the present invention, the incorporation of a fungicide in the resin layer allows the first face of the heat exchange element sheet to have fungus resistance. Here, the general mechanism of the working of a fungicide in suppressing the growth of fungi is considered as follows. Specifically, effective components that can act to suppress the growth of fungi is released slowly from the fungicide and the effective components that can act to suppress the growth of fungi diffuse slowly inside the resin layer. The effective components then reach the first face of the heat exchange element sheet to work to suppress the growth of fungi. This is considered to be the process of the suppression of the growth of fungi on the first face of the heat exchange element sheet.

In general, effective components to suppress the growth of fungi are highly reactive substances in which ions and electric potential are localized in particular portions and tend to be deactivated easily. To ensure sustainable effect for suppressing the growth of fungi, therefore, it is necessary for the effective components to be released continuously from the fungicide and supplied continuously to the first face of the heat exchange element sheet.

The invention uses a solid type fungicide because the fungicide is physically restrained in the resin layer and therefore, the fungicide can continue to exist for a long time in the resin layer while maintaining a constant concentration so that the effective components can continue to be released slowly for a long time to ensure long term suppression of the growth of fungi. Since the fungicide is a solid material, furthermore, the fungicide tends to be in a partly exposed state at the first face of the heat exchange element sheet.

Accordingly, this allows the effective components released slowly from the fungicide, which is designed for suppressing the growth of fungi, to reach the first face of the heat exchange element sheet more easily and in addition, the effective components having reached the first face of the heat exchange element sheet will easily move along the first face of the heat exchange element sheet to spread all over the first face. In this way, high concentrations of the effective components can be maintained over the first face. As a result, the heat exchange element sheet can achieve a high fungi resisting effect. Thus, the fungicide is a solid material.

As compared with this, if the fungicide contained in the resin layer is a non-solid material such as liquid or gel, the intermolecular forces among the molecules that constitute the substance are generally weaker than in solid materials. Accordingly, a liquid or gel type fungicide releases effective components much faster than solid type fungicides. Thus, as described above, the effective components released from the fungicide will be deactivated in a short period of time.

Consequently, a heat exchange element sheet containing a solid type fungicide can maintain fungus resistance for a longer time than a heat exchange element sheet containing a liquid type or gel type fungicide. If left for a long time, furthermore, a liquid type or gel type fungicide tends to undergo phase separation from the resin layer and localization near the first face of the heat exchange element sheet. The fungicide localized near the surface can physically come off from the heat exchange element sheet or undergo early release of effective components in large amounts. From this point of view, too, a solid type fungicide is adopted rather than a liquid type or a gel type one. In addition, if phase separation of the fungicide from the resin layer occurs as described above, it leads to a decrease in the concentration of the fungicide in the resin layer. As a result, the amount of effective components to be generated in the resin layer will also decrease, and this causes a decrease in the fungus resistance of the heat exchange element sheet.

If the fungicide used for the present invention is insoluble in water, furthermore, the fungicide insoluble in water is held inside the resin layer even if the heat exchange element sheet comes in contact with water as described above. This is preferred because this consequently serves to allow the heat exchange element sheet according to the present invention to maintain a high fungus resistance even after coming in contact with water.

Since the fungicide adopted for the present invention is a solid material, it also means that even when contained in the resin layer, it has no influence on chemical structures such as crosslinks and hydrogen bonds between molecules of the polyvinyl pyrrolidone or the like used as main components of the resin layer while maintaining the water resistance of the resin layer and physical durability such as against abrasion of the resin layer at as high a level as in fungicide-free cases.

There are no specific limitations on the shape of the solid type fungicide to use, but it is preferable to adopt a fungicide having a particle shape with a ratio between the longest diameter of the fungicide particles (hereinafter occasionally referred to simply as longest diameter) / the shortest diameter of the fungicide particles (hereinafter occasionally referred to simply as shortest diameter) of 5 or less because in that case, the solid type fungicide has a large surface area to ensure efficient slow release of effective components that act to suppress the growth of fungi. Furthermore, the solid type fungicide has a particle diameter of 10 nm or more, more preferably 50 nm or more, and particularly preferably 100 nm or more. The diameter is in the above range because when the solid type fungicide is contained in the resin layer, the fungicide particles in the resin layer tend to exist near the first face of the heat exchange element sheet or in a partly exposed state at the first face of the heat exchange element sheet, thereby allowing the heat exchange element sheet according to the present invention to have an improved fungus resistance. On the other hand, it is preferable for the particles of the fungicide to have a particle diameter of 6,000 nm or less, in order to control the suppression of the blocking of pores in the porous base material by the resin layer. For the above reasons, it is preferable for the particle type fungicide to have a particle diameter of 4,000 nm or less, particularly preferably 2,000 nm or less.

The ratio between the diameter of the fungicide and the thickness of the resin layer (diameter of fungicide / thickness of resin layer) is 0.5 or more, preferably 1 or more, and particularly preferably 1.5 or more. The ratio is in the above range because when the solid type fungicide is contained in the resin layer, the fungicide particles in the resin layer tend to be located near the first face of the heat exchange element sheet or to be in a partly exposed state at the first face of the heat exchange element sheet, thereby allowing the heat exchange element sheet according to the present invention to have an improved fungus resistance. On the other hand, the ratio between the diameter of the fungicide and the thickness of the resin layer is 10 or less, preferably 5 or less, and particularly preferably 3 or less. The ratio is in the above range because in that case, the solid type fungicide and the resin layer has a large adhesion area and accordingly, the solid type fungicide can be fixed strongly to the resin layer to prevent the solid type fungicide from coming off due to physical external forces etc. It is preferable for the fungicide used for the present invention to be a fungicide that contains one or more selected from the group consisting of pyrithione based compounds, benzoimidazole based compounds, and silver based inorganic substances in order to ensure not only high fungus resistance but also suppression of the growth of germs such as colon bacillus and Staphylococcus aureus. Of the above solid type fungicides, particularly preferable ones include fungicides containing a pyrithione based compound and those containing a benzoimidazole based compound from the viewpoint of low price and high availability.

Examples of such a fungicide containing a pyrithione based compound include products of the Marukacide (registered trademark) series manufactured by Osaka Kasei Co., Ltd. Examples of such a fungicide containing benzoimidazole based compound include products of the Neosintol (registered trademark) series manufactured by SC Environmental Science Co., Ltd. In addition, such a fungicide containing a silver based inorganic substance is preferably an inorganic substance that supports silver and, from the viewpoint of stability of substances and availability, zeolite-supported silver, i.e. zeolite that supports silver, and zirconium phosphate-supported silver, i.e. zirconium phosphate that supports silver are preferred. Examples of zeolite-supported silver include products of the Zeomic (registered trademark) series manufactured by Sinanen Zeomic Co., Ltd. Examples of zirconium phosphate-supported silver include products of the Novaron (registered trademark) series manufactured by Toagosei Co., Ltd.

### (3) Additives

The resin layer used for the present invention may contain additives as required. Useful additives include urethane resins, acrylic resins, UV initiator, inorganic or organic particles, flame retardant, preservative, flame retardant, dyes, and pigments.

The addition of a urethane resin or acrylic resin occasionally serves to improve the gas barrier property and water resistance of the heat exchange element sheet. Urethane resins are insoluble in water and can serve to achieve high water resistance as compared with resin layers containing only water-soluble resins including polyvinyl pyrrolidone or the like. In addition, since urethane resins have tough and flexible properties, a resin layer containing a urethane resin will be tough even when thin, and pores in the porous base material in such a resin layer will be in a firmly blocked state, resulting in a heat exchange element sheet having good gas barrier property. Acrylic resins are durable against water and accordingly, a resin layer containing an acrylic resin will have improved overall water resistance. In addition, the acrylic resin based material to use preferably contain an acrylic resin of a structure in which acrylate chains each having two or more carbon-carbon double bonds are crosslinked. Such an acrylic resin has a three dimensional crosslinked structure that can act to further increase the water resistance of the resin layer.

If a UV initiator is added, the polyvinyl pyrrolidone or the like contained in the resin layer can be crosslinked by applying an ultraviolet ray to the resin layer to improve the water resistance of the heat exchange element sheet.

The addition of inorganic particles or organic particles serves to adjust the lubricity of the heat exchange element sheet surface to a preferred level. Furthermore, the use of inorganic particles or organic particles having hydrophilized surface tends to work for increasing the hygroscopicity of the resin layer.

If a preservative is added, it serves to prevent corrosion from occurring when the heat exchange element sheet according to the present invention is used in a high humidity environment or while being wet with dew.

The addition of a flame retardant can work to improve the fire retardancy of the heat exchange element sheet according to the present invention.

The addition of dyes or pigments serves to color the heat exchange element sheet as desired. If the resin layer is colored, furthermore, the resin layer will be highly visible, possibly making it easy to perform defect inspection and quality management during the heat exchange element sheet production process.

### (4) Area density of resin layer

If the area density of the resin layer is too small, the pores existing in the porous base material may not be blocked sufficiently sometimes, and the heat exchange element sheet may fail to develop required gas barrier property. If it is too large, on the other hand, the heat exchange element sheet may fail to develop required water vapor permeability. On the basis of the above tendencies, it is preferable for the resin layer to have an area density of 0.1 g/m² or more, more preferably 0.2 g/m² or more, and particularly preferably 0.4 g/m² or more. On the other hand, the area density of the resin layer is preferably 3.0 g/m² or less, more preferably 1.0 g/m² or less, and particularly preferably 0.8 g/m² or less. If the area density of the resin layer is in the above favorable range, it allows the heat exchange element sheet according to the present invention to have high gas barrier property and high water vapor permeability.

### (5) Formation method for resin layer

A resin layer is formed on a base material by coating the base material with a coating liquid for resin layer formation that is prepared by mixing the aforementioned polyvinyl pyrrolidone or the like and a fungicide and adding, if required, additives, a solvent, etc., followed, if required, by removing the solvent by drying. Here, the solvent used in the coating liquid is preferably an aqueous solvent. The use of an aqueous solvent in the coating liquid serves to suppress excessively rapid evaporation of the solvent during the drying step, form a resin layer with a uniform thickness, and avoid environment loads.

Here, the aqueous solvent is, for example, one containing one or more water soluble solvents selected from the group consisting of water, alcohols such as ethanol, isopropyl alcohol, and butanol, ketones such as acetone and methyl ethyl ketone, and glycols such as ethylene glycol, diethylene glycol, and propylene glycol.

Useful coating methods for applying a coating liquid to the porous base material include known wet coating methods such as spray coating, immersion coating, spin coating, knife coating, kiss coating, gravure coating, slot die coating, roll coating, bar coating, screen printing, ink jet printing, pad printing, and other printing techniques. Coating may be carried out in multiple steps and two different coating methods may be combined. Preferred coating methods include wet coating methods such as gravure coating, bar coating, and slot die coating.

After the above coating step, a drying step is performed to remove the solvent from the coating liquid applied. Useful solvent removal methods include the convection hot air drying method that applies hot air to the porous base material, the radiation heat drying method that performs drying by applying heat converted from infrared ray emitted from an infrared ray drying apparatus and absorbed by the base material, the conductive heat drying method that performs drying by heating using thermal conduction from a wall surface heated by a heating medium. Of these, the convection hot air drying method is preferred because it achieves a high drying speed. Drying should be performed at a temperature not higher than the melting point of the resin contained in the porous base material and therefore, the drying temperature is more preferably 80°C or less, still more preferably 60°C or less. The use of a drying temperature in the above range is preferred because the porous base material will suffer a thermal shrinkage of as small as 5% or less.

In addition, an ultraviolet ray may be applied to the heat exchange element sheet having a resin layer formed thereon to cause crosslinking in the polyvinyl pyrrolidone or the like. Such ultraviolet ray application may be completed in one step or divided in two or more steps. When performing ultraviolet ray application, the oxygen concentration may be decreased in order to suppress the reaction inhibition caused by oxygen. If processing is performed at a decreased oxygen concentration, it is preferable for oxygen gas to account for 1.0 vol% or less, more preferably 0.5 vol% or less, of the total volume of gas in the system, which accounts for 100 vol%. The relative humidity may be set to an arbitrary value. For the ultraviolet ray exposure, furthermore, it is preferable to reduce the oxygen concentration using nitrogen gas.

As the ultraviolet ray generation source, a known device such as high pressure mercury lamp, metal halide lamp, microwave type electrodeless lamp, low pressure mercury lamp, and xenon lamp may be used.

The cumulative light quantity of the ultraviolet ray exposure is preferably 50 to 2,000 mJ/cm², more preferably 100 to 1,000 mJ/cm², and particularly preferably 150 to 500 mJ/cm². A cumulative light quantity of 50 mJ/cm² or more is preferable because the resin layer can have improved water resistance. A cumulative light quantity of 2,000 mJ/cm² or less is preferable because damage to the base material can be reduced.

### [Heat exchange element sheet]

Described below is a typical production method for a heat exchange element. A heat exchange element sheet is combined with a corrugated sheet that acts as spacing member with an adhesive or the like to form a single faced corrugated board. To ensure an improved strength of adhesion to the resin layer used for present invention, it is preferable to use such an adhesive as vinyl acetate based one and ethylene-vinyl acetate based one. In addition, the corrugated sheet may be treated with a flame retardant as required. Corrugation processing is performed by using a corrugator composed of a pair of engaged gears that rotate to form a corrugated sheet and the combination of a heat exchange element sheet and a corrugated sheet is achieved using an apparatus having a press roll designed to press a heat exchange element sheet against a corrugated sheet sent from the corrugation processing step. The adhesion between a corrugated sheet and a heat exchange element sheet can be achieved by, for example, applying an adhesive to a stepped top part of a corrugated sheet and pressing a heat exchange element sheet thereto. Another good adhesion technique is to apply an adhesive to at least either of a corrugated sheet and a heat exchange element sheet and then the corrugated sheet and the heat exchange element sheet are pressed against each other while heating them.

A heat exchange element can be produced by stacking such single faced corrugated boards. Specifically, an adhesive is applied to the top parts of single faced corrugated boards and a plurality of single faced corrugated sheets are stacked one on another in such a manner that they cross each other.

### EXAMPLES

The present invention will now be illustrated in more detail with reference to examples, but it should be understood that the invention is not limited to these examples. The measuring methods used in these examples are described below. When determining a numerical value from measurements, two measurements were taken and they were averaged to provide a numerical value to adopt, unless otherwise specified.

### <Measuring methods>

### (1) Area density of heat exchange element sheet

Five 100 mm × 100 mm test pieces for testing heat exchange element sheets were prepared and left to stand in an atmosphere at a temperature of 20°C and humidity of 65% RH for 24 hours, and then the mass (g) of each of the five test pieces was measured, followed by calculating the average, which was expressed as mass per square meter (g/m²) to represent the area density (g/m²) of heat exchange element sheet.

### (2) Area density of porous base material

The five test pieces prepared in section (1) were immersed in 200 ml of a solvent (ethyl acetate) in a 300 ml container for 2 minutes, and then each surface of the five test pieces were wiped five times. Next, the five test pieces were immersed again in 200 ml of a solvent (ethyl acetate) in a 300 ml container for 2 minutes. Following this, the five test pieces were left to stand for 24 hours in an atmosphere at a temperature of 20°C and a humidity of 65% RH to provide test pieces of a porous base material prepared by removing the resin layer from a heat exchange element sheet. Subsequently, the mass (g) of each of the five test pieces was measured, followed by calculating the average, which was expressed as mass per square meter (g/m²) to represent the area density (g/m²) of the porous base material.

### (3) Area density of resin layer

Then, the area density (g/m²) of the resin layer was calculated from the area density of the heat exchange element sheet and area density of the porous base material determined in sections (1) and (2) by the following equation. Area density (g/m2) of resin layer = area density (g/m2) of heat exchange element sheet - area density (g/m2) of porous base material

### (4) Thickness of resin layer

The thickness of the resin layer was determined from a SEM cross section image or a TEM cross section image of the heat exchange element sheet. The thickness of the resin layer was considered to be represented by the distance from the first surface of the heat exchange element sheet having penetrated into the porous base material to the interface between the resin layer and the porous base material, and the resin layer components existing in pores of the porous base material were ignored in determining the thickness of the resin layer.

### (5) Identification and contents of components contained in resin layer

The resin layer was scraped off with a knife from the first surface of the heat exchange element sheet, collecting a total of 5 g to provide a test piece. The test piece was analyzed by pyrolysis gas chromatography (pyrolysis GC-MS) to identify the components contained in the resin layer and then, the contents of the components contained in the resin layer were determined.

### (6) Existence/absence of fungicide exposed at first face of heat exchange element sheet

The first face of the heat exchange element sheet was observed by optical microscopy or SEM to confirm the exposure of the fungicide at the first face. When it was impossible to make a decision from observation of the surface, the exposure of the fungicide at the first face was examined based on SEM cross section images of the heat exchange element sheet.

### (7) Size of solid type fungicide particles contained in resin layer

The first face of the heat exchange element sheet was observed by SEM and the size of solid type fungicide particles was determined from an image taken. The area of each solid fungicide particle found in the image was measured by an image analysis technique, and the diameter of a perfect circle having the same area as the measured one was calculated. The average was calculated to represent the size of the solid fungicide particles. In the case where solid fungicide particles were not exposed at the first face and cannot be observed by SEM surface observation, the size of solid fungicide particles was determined by the same procedure as above from a SEM cross section image of the heat exchange element sheet.

### (8) Thickness of heat exchange element sheet

To determine the thickness, three 200 mm × 200 mm test pieces were taken from different positions of a sample (heat exchange element sheet) and left to stand for 24 hours in an atmosphere at a temperature of 20°C and a humidity of 65% RH and then the thickness (µm) was measured at five positions, namely the center and the four corners, of each of the three test pieces using a measuring instrument (model ID-112, manufactured by Mitutoyo Corporation), followed by calculating the average of 15 measurements.

### (9) Water vapor permeability of heat exchange element sheet

Water vapor permeability was measured by the method specified in JIS Z 0208 (1976) "Moisture Permeability (Cup method)". The cup used had a diameter of 60 mm and a dept of 25 mm. Five circular heat exchange element sheets with a diameter of 70 mm were prepared for use as test pieces. The test pieces were left to stand for 24 hours at a temperature of 20°C and a humidity of 65% RH. Subsequently, each test piece was put in a cup containing calcium chloride of a moisture measuring test grade (manufactured by Wako Pure Chemical Industries, Ltd.) and the initial total weight (T₀) of the test piece, calcium chloride, and cup was measured. Then the test piece was placed in a constant-temperature, constant-humidity chamber set at a temperature of 20°C and a humidity of 65% RH, and the total weights (T₁, T₂, T₃, T₄, T₅) of the test piece, calcium chloride, and cup were measured in 1 hour, 2 hours, 3 hours, 4 hours, or 5 hours, respectively, after they were placed in the chamber. The water vapor permeability was calculated by the following equation, and the average over the five sheets was adopted to represent their water vapor permeability (g/m²/hr). Water vapor permeability (g/m2/hr) = {[((T0 - T1) / T1) + ((T0 - T2) / T2) + ((T0 - T3) / T3) + ((T0 - T4) / T4) + ((T0 - T5) / Ts)] / 5}×100

### (10) Air permeability of heat exchange element sheet

Air permeability was measured by the method specified in JIS P 8117 (1998) "Air Permeability (Gurley permeability tester method)". Five test pieces (heat exchange element sheets) with a length of 100 mm and a width of 100 mm were prepared. Each test piece was left to stand for 24 hours at a temperature of 20°C and a humidity of 65% RH, and then the test piece was mounted on a Gurley type densometer (mode G-B3C, manufactured by Toyo Seiki Seisakusho, Ltd.) placed in an environment having the same temperature and humidity as above. The time required for passage of 100 ml of air was measured and the average over the five test pieces was calculated to represent their air permeability (seconds/100 ml). Here, a larger air permeability value means that the heat exchange element sheet has better gas barrier property.

### (11) Fungus resistance of heat exchange element sheet

Fungus resistance was measured according to JIS Z 2911 (2010) Appendix A "Fungus resistance test method B for plastic products". A 30 mm × 30 mm square was cut out of a heat exchange element sheet to provide a sample for test. A mixture of the five fungi of Aspergillus niger, Penicillium pinophilum, Paecilomyces variotii, Trichoderma virens, and Chaetomium globosum was used for the test. The above fungus mixture for test was sprayed on the test sample and cultured for four weeks in an environment at 24°C and 95% RH. After the culturing period, the growth state of the fungi on the sample was observed visually and by microscopy, and the growth state of the fungi was rated according to the six stage criterion as shown in Table 5. A sample given a fungus growth state rating of 0 has a highest level fungus resistance, whereas a sample given a fungus growth state rating of 5 has a lowest level fungus resistance. Evaluation of the growth state of the fungi was performed twice, namely, two weeks and four weeks after the start of culturing.

**[Table 9]**

| JIS Z 2911 (2010) Plastics method B | |
|---|---|
| state | growth state of fungi |
| Growth of fungi is not seen visually or by microscopy. | 0 |
| Growth of fungi is not seen visually, but clearly seen by microscopy. | 1 |
| Growth of fungi is seen visually, with growth area accounting for less than 25% of total area of specimen. | 2 |
| Growth of fungi is seen visually, with growth area accounting for 25% or more and less than 50% of total area of specimen. | 3 |
| Fungi are grown well, with growth area accounting for 50% or more of total area of specimen. | 4 |
| Fungi are grown heavily, covering entire face of specimen. | 5 |

### (12) Antibacteriality of heat exchange element sheet

Antibacteriality was measured according to JIS Z 2801 (2010) "Antimicrobial treated products - Antibacteriality test method". A 30 mm × 30 mm square was cut out of a heat exchange element sheet to provide a sample for test. A polyethylene film was used as an untreated test piece. Staphylococcus aureus was used as test bacteria. A liquid containing the above bacteria was dropped on a test sample and the untreated test piece and cultured for 24 hours in an environment at 35°C and 90% RH. Then, the antibacterial activity value was calculated by the equation given below. Antimicrobial activity = (logarithm of viable cell count of untreated test piece) - (logarithm of viable cell count of test sample)

A higher antimicrobial activity value indicates a higher antibacteriality.

### (13) Cleaning durability test of heat exchange element sheet

Ten 100 mm × 100 mm test pieces of a heat exchange element sheet were prepared. Then, a clearing solution with a concentration of 0.01 mass% was prepared by dissolving a household dish detergent in warm water at 40°C. A test piece was immersed in this clearing solution and left to stand for 5 minutes. Then, the sample was taken out and subjected twice to the procedure of rinsing it for 10 seconds with running water at 40°C. The cleaning treatment cycle composed of the aforementioned steps from immersion in a clearing solution to rinsing was repeated five times for each test sample. This five cycle cleaning treatment test is hereinafter referred to as cleaning durability test The test piece recovered after the cleaning durability test was dried for 3 minutes in a hot air oven set at 60°C and left to stand for 24 hours in an atmosphere at 20°C and 65% RH. Then, the test pieces treated as described above were examined by the measuring methods described in sections (9), (10), (11), and (12) to determine the performance of the heat exchange element sheet after the cleaning durability test.

### (Example 1)

A polyethylene porous film having an area density 6.7 g/m², a thickness of 12 µm, a porosity of 43%, and a pore diameter of 33 nm was prepared and adopted as the porous base material. Its physical properties included a water vapor permeability of 101 g/m²/hr and a permeability of 120 seconds/100 ml.

Then, a paint composition for resin layer formation was prepared by the procedure described below.

Polyvinyl pyrrolidone (LuvitecK85 (registered trademark), manufactured by BASF) and a water dispersion of a solid type fungicide (Marukacide YP-DP (registered trademark), manufactured by Osaka Kasei Co., Ltd., primary component: zinc pyrithione) were used as materials for resin layer formation. A liquid mixture of ethanol and water was used as solvent.

LuvitecK85 (registered trademark), Marukacide YP-DP (registered trademark), ethanol, and water described above were mixed at a mass ratio of 4.0:0.1:63.9:32.0 and stirred amply to prepare a uniform liquid. The resulting mixed solution having a solid content of 4 mass% was used as paint composition for resin layer formation.

Then, a resin layer was formed on the surface of the porous base material by the procedure described below.

The aforementioned paint composition for resin layer formation was spread with a No. 6 bar coater over the surface of the porous base material. After this coating step, drying was performed in a hot air oven set at 60°C for one minute. By the above procedure, a heat exchange element sheet having a resin layer containing 99.5 mass% of polyvinyl pyrrolidone and 0.5 mass% of a solid type fungicide was obtained.

Component features of the heat exchange element sheet are given in Table 1.

### (Example 2)

A paint composition for resin layer formation was prepared by the procedure described below.

LuvitecK85 (registered trademark), Marukacide YP-DP (registered trademark), water, and ethanol were mixed at a mass ratio of 4.0:0.2:63.9:31.9 and stirred amply to prepare a uniform liquid. The resulting mixed solution had a solid content of 4 mass%.

Except for the above, the same procedure as in Example 1 was carried out to produce a heat exchange element sheet having a resin layer containing 99 mass% of polyvinyl pyrrolidone and 1.0 mass% of a solid type fungicide.

Component features of the heat exchange element sheet are given in Table 1.

### (Example 3)

A paint composition for resin layer formation was prepared by the procedure described below.

LuvitecK85 (registered trademark), Marukacide YP-DP (registered trademark), water, and ethanol were mixed at a mass ratio of 3.9:0.4:63.8:31.9 and stirred amply to prepare a uniform liquid. The resulting mixed solution had a solid content of 4 mass%.

Except for the above, the same procedure as in Example 1 was carried out to produce a heat exchange element sheet having a resin layer containing 98 mass% of polyvinyl pyrrolidone and 2.0 mass% of a solid type fungicide.

Component features of the heat exchange element sheet are given in Table 1.

### (Example 4)

A paint composition for resin layer formation was prepared by the procedure described below.

LuvitecK85 (registered trademark), Marukacide YP-DP (registered trademark), water, and ethanol were mixed at a mass ratio of 3.6:1.8:63.0:31.5 and stirred amply to prepare a uniform liquid. The resulting mixed solution had a solid content of 4 mass%.

Except for the above, the same procedure as in Example 1 was carried out to produce a heat exchange element sheet having a resin layer containing 90.9 mass% of polyvinyl pyrrolidone and 9.1 mass% of a solid type fungicide.

Component features of the heat exchange element sheet are given in Table 1.

### (Example 5)

A paint composition for resin layer formation was prepared by the procedure described below.

LuvitecK85, Marukacide YP-DP (registered trademark), water, and ethanol were mixed at a mass ratio of 3.2:4.0:61.9:30.9 and stirred amply to prepare a uniform liquid. The resulting mixed solution had a solid content of 4 mass%.

Except for the above, the same procedure as in Example 1 was carried out to produce a heat exchange element sheet having a resin layer containing 80 mass% of polyvinyl pyrrolidone and 20 mass% of a solid type fungicide.

Component features of the heat exchange element sheet are given in Table 1.

### (Example 6)

A paint composition for resin layer formation was prepared by the procedure described below.

LuvitecK85 (registered trademark), Marukacide YP-DP (registered trademark), water, and ethanol were mixed at a mass ratio of 2.9:5.7:60.9:30.5 and stirred amply to prepare a uniform liquid. The resulting mixed solution had a solid content of 4 mass%.

Except for the above, the same procedure as in Example 1 was carried out to produce a heat exchange element sheet having a resin layer containing 71.4 mass% of polyvinyl pyrrolidone and 28.6 mass% of a solid type fungicide.

Component features of the heat exchange element sheet are given in Table 1.

### (Example 7)

A paint composition for resin layer formation was prepared by the procedure described below. Neosintol AF-75 manufactured by SC Environmental Science Co., Ltd. (primary component: thiabendazole) was used as water dispersion of a solid type fungicide.

LuvitecK85 (registered trademark), Neosintol AF-75, water, and ethanol were mixed at a mass ratio of 3.98:0.04:64.0:32.0 and stirred amply to prepare a uniform liquid. The resulting mixed solution had a solid content of 4 mass%.

Except for the above, the same procedure as in Example 1 was carried out to produce a heat exchange element sheet having a resin layer containing 99.5 mass% of polyvinyl pyrrolidone and 0.5 mass% of a solid type fungicide.

Component features of the heat exchange element sheet are given in Table 1.

### (Example 8)

A paint composition for resin layer formation was prepared by the procedure described below.

LuvitecK85 (registered trademark), Neosintol AF-75, water, and ethanol were mixed at a mass ratio of 3.8:0.4:63.9:31.9 and stirred amply to prepare a uniform liquid. The resulting mixed solution had a solid content of 4 mass%.

Except for the above, the same procedure as in Example 1 was carried out to produce a heat exchange element sheet having a resin layer containing 95.2 mass% of polyvinyl pyrrolidone and 4.8 mass% of a solid type fungicide.

Component features of the heat exchange element sheet are given in Table 1.

### (Example 9)

A paint composition for resin layer formation was prepared by the procedure described below.

LuvitecK85 (registered trademark), Neosintol AF-75, water, and ethanol were mixed at a mass ratio of 3.6:0.9:63.7:31.9 and stirred amply to prepare a uniform liquid. The resulting mixed solution had a solid content of 4 mass%.

Except for the above, the same procedure as in Example 1 was carried out to produce a heat exchange element sheet having a resin layer containing 88.9 mass% of polyvinyl pyrrolidone and 11.1 mass% of a solid type fungicide.

Component features of the heat exchange element sheet are given in Table 1.

### (Example 10)

A paint composition for resin layer formation was prepared by the procedure described below.

LuvitecK85 (registered trademark), Neosintol AF-75, water, and ethanol were mixed at a mass ratio of 3.2:1.6:63.5:31.7 and stirred amply to prepare a uniform liquid. The resulting mixed solution had a solid content of 4 mass%.

Except for the above, the same procedure as in Example 1 was carried out to produce a heat exchange element sheet having a resin layer containing 80 mass% of polyvinyl pyrrolidone and 20 mass% of a solid type fungicide.

Component features of the heat exchange element sheet are given in Table 1.

### (Example 11)

A paint composition for resin layer formation was prepared by the procedure described below.

LuvitecK85 (registered trademark), Neosintol AF-75, water, and ethanol were mixed at a mass ratio of 2.9:2.3:63.2:31.6 and stirred amply to prepare a uniform liquid. The resulting mixed solution had a solid content of 4 mass%.

Except for the above, the same procedure as in Example 1 was carried out to produce a heat exchange element sheet having a resin layer containing 71.4 mass% of polyvinyl pyrrolidone and 28.6 mass% of a solid type fungicide.

Component features of the heat exchange element sheet are given in Table 1.

### (Example 12)

A paint composition for resin layer formation was prepared by the procedure described below. Zeomic WHW10NS (primary component: zirconia-supported silver) manufactured by Sinanen Zeomic Co., Ltd. was used as water dispersion of a solid type fungicide, and LuvitecK85 (registered trademark), Zeomic WHW10NS, water, and ethanol were mixed at a mass ratio of 3.9:0.4:63.8:31.9 and stirred amply to prepare a uniform liquid. The resulting mixed solution had a solid content of 4 mass%.

Except for the above, the same procedure as in Example 1 was carried out to produce a heat exchange element sheet having a resin layer containing 98 mass% of polyvinyl pyrrolidone and 2 mass% of a solid type fungicide.

Component features of the heat exchange element sheet are given in Table 1.

### (Example 13)

A paint composition for resin layer formation was prepared by the procedure described below.

LuvitecK85 (registered trademark), Zeomic WHW10NS, water, and ethanol were mixed at a mass ratio of 3.8:1.0:63.5:31.7 and stirred amply to prepare a uniform liquid. The resulting mixed solution had a solid content of 4 mass%.

Except for the above, the same procedure as in Example 1 was carried out to produce a heat exchange element sheet having a resin layer containing 95.2 mass% of polyvinyl pyrrolidone and 4.8 mass% of a solid type fungicide.

Component features of the heat exchange element sheet are given in Table 1.

### (Example 14)

A paint composition for resin layer formation was prepared by the procedure described below.

LuvitecK85 (registered trademark), Zeomic WHW10NS, water, and ethanol were mixed at a mass ratio of 3.6:1.8:63.0:31.5 and stirred amply to prepare a uniform liquid. The resulting mixed solution had a solid content of 4 mass%.

Except for the above, the same procedure as in Example 1 was carried out to produce a heat exchange element sheet having a resin layer containing 90.9 mass% of polyvinyl pyrrolidone and 9.1 mass% of a solid type fungicide.

Component features of the heat exchange element sheet are given in Table 1.

### (Reference Example 15)

A paint composition for resin layer formation was prepared by the procedure described below. A fungicide solution in the form of oil soluble liquid (Marukacide BX-O (registered trademark), manufactured by Osaka Kasei Co., Ltd., primary component: carbamic acid based compound) was prepared as fungicide.

LuvitecK85 (registered trademark), Marukacide BX-O, water, and ethanol were mixed at a mass ratio of 3.9:0.4:63.8:31.9 and stirred amply to prepare a uniform liquid. The resulting mixed solution had a solid content of 4 mass%.

Except for the above, the same procedure as in Example 1 was carried out to produce a heat exchange element sheet having a resin layer containing 97.6 mass% of polyvinyl pyrrolidone and 2.4 mass% of an oil soluble liquid type fungicide.

Component features of the heat exchange element sheet are given in Table 1.

### (Reference Example 16)

A paint composition for resin layer formation was prepared by the procedure described below.

LuvitecK85 (registered trademark), Marukacide BX-O (registered trademark), water, and ethanol were mixed at a mass ratio of 3.2:3.2:62.4:31.2 and stirred amply to prepare a uniform liquid. The resulting mixed solution had a solid content of 4 mass%.

Except for the above, the same procedure as in Example 1 was carried out to produce a heat exchange element sheet having a resin layer containing 80 mass% of polyvinyl pyrrolidone and 20 mass% of an oil soluble liquid type fungicide.

Component features of the heat exchange element sheet are given in Table 1.

### (Reference Example 17)

A paint composition for resin layer formation was prepared by the procedure described below. A fungicide in the form of water soluble liquid (Marukacide SY (registered trademark), manufactured by Osaka Kasei Co., Ltd., primary component: organic nitrogen-sulfur compound) was prepared as fungicide.

LuvitecK85 (registered trademark), Marukacide SY (registered trademark), water, and ethanol were mixed at a mass ratio of 3.9:0.2:63.9:32.0 and stirred amply to prepare a uniform liquid. The resulting mixed solution had a solid content of 4 mass%.

Except for the above, the same procedure as in Example 1 was carried out to produce a heat exchange element sheet having a resin layer containing 97.6 mass% of polyvinyl pyrrolidone and 2.4 mass% of a water soluble liquid type fungicide.

Component features of the heat exchange element sheet are given in Table 1.

### (Reference Example 18)

A paint composition for resin layer formation was prepared by the procedure described below.

LuvitecK85 (registered trademark), Marukacide SY (registered trademark), water, and ethanol were mixed at a mass ratio of 3.2:1.6:63.5:31.7 and stirred amply to prepare a uniform liquid. The resulting mixed solution had a solid content of 4 mass%.

Except for the above, the same procedure as in Example 1 was carried out to produce a heat exchange element sheet having a resin layer containing 80 mass% of polyvinyl pyrrolidone and 20 mass% of a water soluble liquid type fungicide.

Component features of the heat exchange element sheet are given in Table 1.

### (Comparative example 1)

A paint composition for resin layer formation was prepared by the procedure described below.

LuvitecK85 (registered trademark), water, and ethanol were mixed at a mass ratio of 4.0:64.0:32.0 and stirred amply to prepare a uniform liquid. The resulting mixed solution had a solid content of 4 mass%.

Except for the above, the same procedure as in Example 1 was carried out to produce a heat exchange element sheet having a resin layer containing 100 mass% of polyvinyl pyrrolidone.

Component features of the heat exchange element sheet are given in Table 1.

Evaluation results obtained from the heat exchange element sheets prepared in Examples 1 to 14 and Reference Examples 15 to 18 and Comparative example 1 are shown in Table 2. Reference Examples are marked with a *. In all heat exchange element sheets, the resin layer contains polyvinyl pyrrolidone to achieve a high water vapor permeability while the pores in the porous base material are blocked by the resin layer to achieve a high air permeability.

The heat exchange element sheets prepared in Examples 1 to 14 and Reference Examples 15 to 18 have fungus resistance because the resin layers contain fungicides.

The heat exchange element sheet prepared in Comparative example 1 is low in fungus resistance because the resin layer contains no fungicide.

When results of fungus resistance evaluation are compared between the heat exchange element sheets prepared in Examples 1 to 14, which contained a solid type fungicide, and the heat exchange element sheets prepared in Reference Examples 15 to 18, which contained a non-solid type fungicide, it is found that the heat exchange element sheets prepared in Examples 1 to 14 maintained a high fungus resistance even after four weeks following the start of evaluation. Thus, it can be seen that fungus resistance is maintained for a longer period of time when a solid type fungicide is contained in the resin layer.

When the heat exchange element sheets prepared in, for example, Examples 5 and 10, which contained a solid type fungicide, are compared with the heat exchange element sheets prepared in, for example, Reference Examples 16 and 18, which contained a non-solid type fungicide, furthermore, it is also seen that the sheets prepared in Examples 5 and 10 were higher in fungus resistance although all these heat exchange element sheets had the same fungicide content of 20 mass%. Thus, it is shown that particularly high fungus resistance is realized when a solid type fungicide is contained in the resin layer.

**[Table 1]**

| | area density of resin layer | thickness of resin layer | content of PVP etc. | presence or absence of crosslinked structure of PVP etc. | type of fungicide | content of fungicide | property of fungicide | fungicide exposure at first face of sheet | size of fungicide | fungicide diameter / resin layer thickness | type of additive |
|---|---|---|---|---|---|---|---|---|---|---|---|
| | g/m² | nm | mass% | | | mass% | | | nm | | |
| Example 1 | 0.5 | 120 | 99.5 | absent | zinc pyrithione | 0.5 | solid | exposed | 350 | 2.9 | none |
| Example 2 | 0.5 | 120 | 99.0 | absent | zinc pyrithione | 1.0 | solid | exposed | 350 | 2.9 | none |
| Example 3 | 0.5 | 120 | 98.0 | absent | zinc pyrithione | 2.0 | solid | exposed | 350 | 2.9 | none |
| Example 4 | 0.5 | 120 | 90.9 | absent | zinc pyrithione | 9.1 | solid | exposed | 350 | 2.9 | none |
| Example 5 | 0.5 | 120 | 80.0 | absent | zinc pyrithione | 20.0 | solid | exposed | 350 | 2.9 | none |
| Example 6 | 0.5 | 120 | 71.4 | absent | zinc pyrithione | 28.6 | solid | exposed | 350 | 2.9 | none |
| Example 7 | 0.5 | 120 | 99.5 | absent | thiabendazole | 0.5 | solid | exposed | 350 | 2.9 | none |
| Example 8 | 0.5 | 120 | 95.2 | absent | thiabendazole | 4.8 | solid | exposed | 350 | 2.9 | none |
| Example 9 | 0.5 | 120 | 88.9 | absent | thiabendazole | 11.1 | solid | exposed | 350 | 2.9 | none |
| Example 10 | 0.5 | 120 | 80.0 | absent | thiabendazole | 20.0 | solid | exposed | 350 | 2.9 | none |
| Example 11 | 0.5 | 120 | 71.4 | absent | thiabendazole | 28.6 | solid | exposed | 350 | 2.9 | none |
| Example 12 | 0.5 | 120 | 98.0 | absent | zeolite-supported silver | 2.0 | solid | exposed | 1100 | 9.2 | none |
| Example 13 | 0.5 | 120 | 95.2 | absent | zeolite-supported silver | 4.8 | solid | exposed | 1100 | 9.2 | none |
| Example 14 | 0.5 | 120 | 90.9 | absent | zeolite-supported silver | 9.1 | solid | exposed | 1100 | 9.2 | none |
| Example 15* | 0.5 | 120 | 97.6 | absent | carbamic acid based compound | 2.4 | oil-soluble liquid | exposed | - | - | none |
| Example 16* | 0.5 | 120 | 80.0 | absent | carbamic acid based compound | 20.0 | oil-soluble liquid | exposed | - | - | none |
| Example 17* | 0.5 | 120 | 97.6 | absent | organic nitrogen sulfur compound | 2.4 | water-soluble liquid | exposed | - | - | none |
| Example 18* | 0.5 | 120 | 80.0 | absent | organic nitrogen sulfur compound | 20.0 | water-soluble liquid | exposed | - | - | none |
| Comparative example 1 | 0.5 | 120 | 100.0 | absent | - | 0.0 | - | - | - | - | none |

**[Table 2]**

| | performance of heat exchange element sheet | | | | |
|---|---|---|---|---|---|
| | water vapor permeability | air permeability | growth state of fungi (after 2 weeks) | growth state of fungi (after 4 weeks) | antimicrobial activity |
| | g/m²/hr | S/100 ml | | | |
| Example 1 | 60 | > 40000 | 2 | 3 | > 4.9 |
| Example 2 | 60 | > 40000 | 1 | 2 | > 4.9 |
| Example 3 | 60 | > 40000 | 1 | 1 | > 4.9 |
| Example 4 | 60 | > 40000 | 0 | 0 | > 4.9 |
| Example 5 | 60 | > 40000 | 0 | 0 | > 4.9 |
| Example 6 | 60 | > 40000 | 0 | 0 | > 4.9 |
| Example 7 | 60 | > 40000 | 2 | 3 | > 4.9 |
| Example 8 | 60 | > 40000 | 0 | 0 | > 4.9 |
| Example 9 | 60 | > 40000 | 0 | 0 | > 4.9 |
| Example 10 | 60 | > 40000 | 0 | 0 | > 4.9 |
| Example 11 | 60 | > 40000 | 0 | 0 | > 4.9 |
| Example 12 | 60 | > 40000 | 2 | 3 | 4.5 |
| Example 13 | 60 | > 40000 | 2 | 3 | > 4.9 |
| Example 14 | 60 | > 40000 | 1 | 2 | > 4.9 |
| Example 15* | 60 | > 40000 | 2 | 5 | 0.5 |
| Example 16* | 60 | > 40000 | 2 | 4 | 1.3 |
| Example 17* | 60 | > 40000 | 3 | 5 | 0.6 |
| Example 18* | 60 | > 40000 | 2 | 4 | 1.5 |
| Comparative example 1 | 60 | > 40000 | 5 | 5 | 0.1 |

### (Example 19)

LuvitecK85 (registered trademark), Marukacide YP-DP (registered trademark), urethane emulsion (Hydran WLS-201 (registered trademark), manufactured by DIC), and polyfunctional acrylate (Light Acrylate DPE6A (registered trademark), manufactured by Kyoeisha Chemical Co., Ltd.) were prepared as resin layer materials. A liquid mixture of ethanol and water was used as solvent. LuvitecK85 (registered trademark), Marukacide YP-DP (registered trademark), Hydran WLS-201 (registered trademark), Light Acrylate DPE6A (registered trademark), water, and ethanol were mixed at a mass ratio of 3.0:0.1:2.3:0.2:62.9:31.5 and stirred amply to prepare a uniform liquid. The resulting mixed solution having a solid content of 4 mass% was used as paint composition for resin layer formation. In addition, a UV initiator (Omnirad (registered trademark) 184, manufactured by IGM Resins) was added to the above the paint composition in such a manner that it accounted for 3 mass% relative to the content of LuvitecK85 (registered trademark), in order to provide a paint composition for resin layer formation.

Then, a resin layer was formed on the surface of the porous base material by the procedure described below.

The aforementioned paint composition for resin layer formation was spread with a No. 6 bar coater over the surface of the porous base material. After this coating step, drying was performed in a a hot air oven set at 60°C for one minute. Then, the porous base material coated with a resin layer was fixed on a paper base with tape and subjected to a 200 mJ/cm² dose of UV ray in atmospheric air using UV irradiation equipment (ECS-301, manufactured by Eye Graphics Co., Ltd.) to cause crosslinking in the resin layer.

By the above procedure, a heat exchange element sheet having a resin layer containing 71.9 mass% of polyvinyl pyrrolidone and 0.5 mass% of a solid type fungicide was obtained.

Component features of the heat exchange element sheet are given in Table 3.

### (Example 20)

A paint composition for resin layer formation was prepared by the procedure described below. LuvitecK85 (registered trademark), Marukacide YP-DP (registered trademark), Hydran WLS-201 (registered trademark), Light Acrylate DPE6A (registered trademark), water, and ethanol were mixed at a mass ratio of 3.0:0.2:2.3:0.2:62.9:31.4.

Except for the above, the same procedure as in Reference Example 15 was carried out to produce a heat exchange element sheet having a resin layer containing 71.6 mass% of polyvinyl pyrrolidone and 1.0 mass% of a solid type fungicide.

Component features of the heat exchange element sheet are given in Table 3.

### (Example 21)

A paint composition for resin layer formation was prepared by the procedure described below. LuvitecK85 (registered trademark), Marukacide YP-DP (registered trademark), Hydran WLS-201 (registered trademark), Light Acrylate DPE6A (registered trademark), water, and ethanol were mixed at a mass ratio of 2.9:0.4:2.2:0.2:62.8:31.4.

Except for the above, the same procedure as in Reference Example 15 was carried out to produce a heat exchange element sheet having a resin layer containing 70.8 mass% of polyvinyl pyrrolidone and 2.0 mass% of a solid type fungicide.

Component features of the heat exchange element sheet are given in Table 3.

### (Example 22)

A paint composition for resin layer formation was prepared by the procedure described below. LuvitecK85 (registered trademark), Marukacide YP-DP (registered trademark), Hydran WLS-201 (registered trademark), and Light Acrylate DPE6A (registered trademark), water, and ethanol were mixed at a mass ratio of 2.7:1.8:2.1:0.2:62.1:31.0.

Except for the above, the same procedure as in Reference Example 15 was carried out to produce a heat exchange element sheet having a resin layer containing 65.7 mass% of polyvinyl pyrrolidone and 9.1 mass% of a solid type fungicide.

Component features of the heat exchange element sheet are given in Table 3.

### (Example 23)

A paint composition for resin layer formation was prepared by the procedure described below. LuvitecK85 (registered trademark), Marukacide YP-DP (registered trademark), Hydran WLS-201 (registered trademark), and Light Acrylate DPE6A (registered trademark), water, and ethanol were mixed at a mass ratio of 2.4:4.0:1.8:0.2:61.0:30.5.

Except for the above, the same procedure as in Reference Example 15 was carried out to produce a heat exchange element sheet having a resin layer containing 57.8 mass% of polyvinyl pyrrolidone and 20.0 mass% of a solid type fungicide.

Component features of the heat exchange element sheet are given in Table 3.

### (Example 24)

A paint composition for resin layer formation was prepared by the procedure described below. LuvitecK85 (registered trademark), Marukacide YP-DP (registered trademark), Hydran WLS-201 (registered trademark), and Light Acrylate DPE6A (registered trademark), water, and ethanol were mixed at a mass ratio of 2.1:5.7:1.6:0.1:60.2:30.1.

Except for the above, the same procedure as in Reference Example 15 was carried out to produce a heat exchange element sheet having a resin layer containing 51.6 mass% of polyvinyl pyrrolidone and 28.6 mass% of a solid type fungicide.

Component features of the heat exchange element sheet are given in Table 3.

### (Example 25)

A paint composition for resin layer formation was prepared by the procedure described below. LuvitecK85 (registered trademark), Neosintol AF-75, Hydran WLS-201 (registered trademark), Light Acrylate DPE6A (registered trademark), water, and ethanol were mixed at a mass ratio of 3.0:0.04:2.3:0.2:62.9:31.5.

Except for the above, the same procedure as in Reference Example 15 was carried out to produce a heat exchange element sheet having a resin layer containing 71.9 mass% of polyvinyl pyrrolidone and 0.5 mass% of a solid type fungicide.

Component features of the heat exchange element sheet are given in Table 4.

### (Example 26)

A paint composition for resin layer formation was prepared by the procedure described below. LuvitecK85 (registered trademark), Neosintol AF-75, Hydran WLS-201 (registered trademark), Light Acrylate DPE6A (registered trademark), water, and ethanol were mixed at a mass ratio of 2.9:0.4:2.2:0.2:62.9:31.4.

Except for the above, the same procedure as in Reference Example 15 was carried out to produce a heat exchange element sheet having a resin layer containing 68.8 mass% of polyvinyl pyrrolidone and 4.8 mass% of a solid type fungicide.

Component features of the heat exchange element sheet are given in Table 4.

### (Example 27)

A paint composition for resin layer formation was prepared by the procedure described below. LuvitecK85 (registered trademark), Neosintol AF-75, Hydran WLS-201 (registered trademark), Light Acrylate DPE6A (registered trademark), water, and ethanol were mixed at a mass ratio of 2.7:0.9:2.0:0.2:62.8:31.4.

Except for the above, the same procedure as in Reference Example 15 was carried out to produce a heat exchange element sheet having a resin layer containing 64.3 mass% of polyvinyl pyrrolidone and 11.1 mass% of a solid type fungicide.

Component features of the heat exchange element sheet are given in Table 4.

### (Example 28)

A paint composition for resin layer formation was prepared by the procedure described below. LuvitecK85 (registered trademark), Neosintol AF-75, Hydran WLS-201 (registered trademark), Light Acrylate DPE6A (registered trademark), water, and ethanol were mixed at a mass ratio of 2.4:1.6:1.8:0.2:62.6:31.3.

Except for the above, the same procedure as in Reference Example 15 was carried out to produce a heat exchange element sheet having a resin layer containing 57.8 mass% of polyvinyl pyrrolidone and 20.0 mass% of a solid type fungicide.

Component features of the heat exchange element sheet are given in Table 4.

### (Example 29)

A paint composition for resin layer formation was prepared by the procedure described below. LuvitecK85 (registered trademark), Neosintol AF-75, Hydran WLS-201 (registered trademark), Light Acrylate DPE6A (registered trademark), water, and ethanol were mixed at a mass ratio of 2.1:2.3:1.6:0.1:62.5:31.2.

Except for the above, the same procedure as in Reference Example 15 was carried out to produce a heat exchange element sheet having a resin layer containing 51.6 mass% of polyvinyl pyrrolidone and 28.6 mass% of a solid type fungicide.

Component features of the heat exchange element sheet are given in Table 4.

### (Example 30)

A paint composition for resin layer formation was prepared by the procedure described below. LuvitecK85 (registered trademark), Zeomic WHW10NS, Hydran WLS-201 (registered trademark), Light Acrylate DPE6A (registered trademark), water, and ethanol were mixed at a mass ratio of 2.9:0.4:2.2:0.2:62.8:31.4.

Except for the above, the same procedure as in Reference Example 15 was carried out to produce a heat exchange element sheet having a resin layer containing 70.8 mass% of polyvinyl pyrrolidone and 2.0 mass% of a solid type fungicide.

Component features of the heat exchange element sheet are given in Table 5.

### (Example 31)

A paint composition for resin layer formation was prepared by the procedure described below. LuvitecK85 (registered trademark), Zeomic WHW10NS, Hydran WLS-201 (registered trademark), Light Acrylate DPE6A (registered trademark), water, and ethanol were mixed at a mass ratio of 2.9:1.0:2.2:0.2:62.5:31.2.

Except for the above, the same procedure as in Reference Example 15 was carried out to produce a heat exchange element sheet having a resin layer containing 68.8 mass% of polyvinyl pyrrolidone and 4.8 mass% of a solid type fungicide.

Component features of the heat exchange element sheet are given in Table 5.

### (Example 32)

A paint composition for resin layer formation was prepared by the procedure described below. LuvitecK85 (registered trademark), Zeomic WHW10NS, Hydran WLS-201 (registered trademark), Light Acrylate DPE6A (registered trademark), water, and ethanol were mixed at a mass ratio of 2.7:1.8:2.1:0.2:62.1:31.0.

Except for the above, the same procedure as in Reference Example 15 was carried out to produce a heat exchange element sheet having a resin layer containing 65.7 mass% of polyvinyl pyrrolidone and 9.1 mass% of a solid type fungicide.

Component features of the heat exchange element sheet are given in Table 5.

### (Reference Example 33)

A paint composition for resin layer formation was prepared by the procedure described below.

LuvitecK85 (registered trademark), Marukacide BX-O (registered trademark), Hydran WLS-201 (registered trademark), Light Acrylate DPE6A (registered trademark), water, and ethanol were mixed at a mass ratio of 2.9:0.4:2.2:0.2:62.8:31.4.

Except for the above, the same procedure as in Reference Example 15 was carried out to produce a heat exchange element sheet having a resin layer containing 70.6 mass% of polyvinyl pyrrolidone and 2.4 mass% of an oil soluble liquid type fungicide.

Component features of the heat exchange element sheet are given in Table 5.

### (Reference Example 34)

A paint composition for resin layer formation was prepared by the procedure described below. LuvitecK85 (registered trademark), Marukacide BX-O (registered trademark), Hydran WLS-201 (registered trademark), Light Acrylate DPE6A (registered trademark), water, and ethanol were mixed at a mass ratio of 2.4:3.2:1.8:0.2:61.6:30.8.

Except for the above, the same procedure as in Reference Example 15 was carried out to produce a heat exchange element sheet having a resin layer containing 57.8 mass% of polyvinyl pyrrolidone and 20.0 mass% of an oil soluble liquid type fungicide.

Component features of the heat exchange element sheet are given in Table 5.

### (Reference Example 35)

A paint composition for resin layer formation was prepared by the procedure described below. LuvitecK85 (registered trademark), Marukacide SY (registered trademark), Hydran WLS-201 (registered trademark), Light Acrylate DPE6A (registered trademark), water, and ethanol were mixed at a mass ratio of 2.9:0.3:2.2:0.2:62.9:31.4.

Except for the above, the same procedure as in Reference Example 15 was carried out to produce a heat exchange element sheet having a resin layer containing 69.8 mass% of polyvinyl pyrrolidone and 3.4 mass% of an oil soluble liquid type fungicide.

Component features of the heat exchange element sheet are given in Table 5.

### (Reference Example 36)

A paint composition for resin layer formation was prepared by the procedure described below. LuvitecK85 (registered trademark), Marukacide SY (registered trademark), Hydran WLS-201 (registered trademark), Light Acrylate DPE6A (registered trademark), water, and ethanol were mixed at a mass ratio of 2.4:1.6:1.8:0.2:62.6:31.3.

Except for the above, the same procedure as in Reference Example 15 was carried out to produce a heat exchange element sheet having a resin layer containing 57.8 mass% of polyvinyl pyrrolidone and 20.0 mass% of an oil soluble liquid type fungicide.

Component features of the heat exchange element sheet are given in Table 5.

### (Comparative example 2)

A paint composition for resin layer formation was prepared by the procedure described below. LuvitecK85 (registered trademark), Hydran WLS-201 (registered trademark), Light Acrylate DPE6A (registered trademark), water, and ethanol were mixed at a mass ratio of 3.0:2.3:0.2:62.9:31.5.

Except for the above, the same procedure as in Reference Example 15 was carried out to produce a heat exchange element sheet having a resin layer containing 72.3 mass% of polyvinyl pyrrolidone.

Component features of the heat exchange element sheet are given in Table 5.

Evaluation results obtained from the heat exchange element sheets prepared in Examples 19 to 32 and Reference Examples 33 to 36 and Comparative example 2 are shown in Table 6. Reference Examples are marked with a *. These heat exchange element sheets were subjected to cleaning durability test, and performance evaluation was performed before and after the test. In all heat exchange element sheets, the resin layer contains polyvinyl pyrrolidone to achieve a high water vapor permeability while the pores in the porous base material are blocked by the resin layer to achieve a high air permeability.

In the heat exchange element sheets prepared in Examples 19 to 32 and Reference Examples 33 to 36 and Comparative example 2, the resin layer further includes a crosslinked structure of polyvinyl pyrrolidone and contains acrylic resin in which urethane resin and an acrylate having two or more carbon-carbon double bonds are crosslinked. As a result, the heat exchange element sheets prepared in Examples 19 to 32 and Reference Examples 33 to 36 and Comparative example 2 are so high in water resistance that even after the cleaning durability test, they show as high a water vapor permeability and air permeability as before the cleaning durability test.

In the heat exchange element sheets prepared in Examples 19 to 32, the resin layer contains a solid type fungicide to realize a high fungus resistance and therefore, even after the cleaning durability test, they show as high a fungus resistance as before the cleaning durability test.

The heat exchange element sheet prepared in Comparative example 2 was low in fungus resistance because the resin layer contained no fungicide.

In the heat exchange element sheets prepared in Examples 23 and 28, the resin layer contains 20 mass% of a solid type fungicide. In the heat exchange element sheets prepared in Reference Examples 34 and 36, on the other hand, the resin layer contains 20 mass% of a non-solid type fungicide. When the heat exchange element sheets prepared in Examples 23 and 28 are compared with the heat exchange element sheets prepared in Reference Examples 34 and 36, the heat exchange element sheets prepared in Examples 23 and 28 do not show deterioration in air permeability after the cleaning durability test. This is considered to be because in the case where the resin layer contains a solid type fungicide, crosslinking of polyvinyl pyrrolidone etc. in the resin layer is not impeded and this allows the heat exchange element sheet to have a high cleaning durability.

Thus, this indicates that the use of a solid type fungicide allows the heat exchange element sheet to have a high water resistance and a high fungus resistance.

**[Table 3]**

| | area density of resin layer | thickness of resin layer | content of PVP etc. | presence or absence of crosslinked structure of PVP etc. | type of fungicide | content of fungicide | property of fungicide | fungicide exposure at first face of sheet | size of fungicide | fungicide diameter / resin layer thickness | type of additive (content in mass%) |
|---|---|---|---|---|---|---|---|---|---|---|---|
| | g/m² | nm | mass% | | | mass% | | | nm | | |
| Example 19 | 0.5 | 120 | 71.9 | present | zinc pyrithione | 0.5 | solid | exposed | 350 | 2.9 | urethane (19.2) |
| | | | | | | | | | | | polyfunctional acrylate (4.8) |
| | | | | | | | | | | | UV initiator (3.6) |
| Example 20 | 0.5 | 120 | 71.6 | present | zinc pyrithione | 1.0 | solid | exposed | 350 | 2.9 | urethane (19.1) |
| | | | | | | | | | | | polyfunctional acrylate (4.8) |
| | | | | | | | | | | | UV initiator (3.6) |
| Example 21 | 0.5 | 120 | 70.8 | present | zinc pyrithione | 2.0 | solid | exposed | 350 | 2.9 | urethane (18.9) |
| | | | | | | | | | | | polyfunctional acrylate (4.7) |
| | | | | | | | | | | | UV initiator (3.5) |
| Example 22 | 0.5 | 120 | 65.7 | present | zinc pyrithione | 9.1 | solid | exposed | 350 | 2.9 | urethane (17.5) |
| | | | | | | | | | | | polyfunctional acrylate (4.4) |
| | | | | | | | | | | | UV initiator (3.3) |
| Example 23 | 0.5 | 120 | 57.8 | present | zinc pyrithione | 20.0 | solid | exposed | 350 | 2.9 | urethane (15.4) |
| | | | | | | | | | | | polyfunctional acrylate (3.9) |
| | | | | | | | | | | | UV initiator (2.9) |
| Example 24 | 0.5 | 120 | 51.6 | present | zinc pyrithione | 28.6 | solid | exposed | 350 | 2.9 | urethane (13.8) |
| | | | | | | | | | | | polyfunctional acrylate (3.4) |
| | | | | | | | | | | | UV initiator (2.6) |

**[Table 4]**

| | area density of resin layer | thickness of resin layer | content of PVP etc. | presence or absence of crosslinke d structure of PVP etc. | type of fungicide | content of fungicide | property of fungicide | fungicide exposure at first face of sheet | size of fungicide | fungicide diameter / resin layer thickness | type of additive (content in mass%) |
|---|---|---|---|---|---|---|---|---|---|---|---|
| | g/m² | nm | mass% | | | mass% | | | nm | | |
| Example 25 | 0.5 | 120 | 71.9 | present | thiabendazole | 0.5 | solid | exposed | 350 | 2.9 | urethane (19.2) |
| | | | | | | | | | | | polyfunctional acrylate (4.8) |
| | | | | | | | | | | | UV initiator (3.6) |
| Example 26 | 0.5 | 120 | 68.8 | present | thiabendazole | 4.8 | solid | exposed | 350 | 2.9 | urethane (18.4) |
| | | | | | | | | | | | polyfunctional acrylate (4.6) |
| | | | | | | | | | | | UV initiator (3.4) |
| Example 27 | 0.5 | 120 | 64.3 | present | thiabendazole | 11.1 | solid | exposed | 350 | 2.9 | urethane (17.1) |
| | | | | | | | | | | | polyfunctional acrylate (4.3) |
| | | | | | | | | | | | UV initiator (3.2) |
| Example 28 | 0.5 | 120 | 57.8 | present | thiabendazole | 20.0 | solid | exposed | 350 | 2.9 | urethane (15.4) |
| | | | | | | | | | | | polyfunctional acrylate (3.9) |
| | | | | | | | | | | | UV initiator (2.9) |
| Example 29 | 0.5 | 120 | 51.6 | present | thiabendazole | 28.6 | solid | exposed | 350 | 2.9 | urethane (13.8) |
| | | | | | | | | | | | polyfunctional acrylate (3.4) |
| | | | | | | | | | | | UV initiator (2.6) |

**[Table 5]**

| | area density of resin layer | thickness of resin layer | content of PVP etc. | presence or absence of crosslinked structure of PVP etc. | type of fungicide | content of fungicide | property of fungicide | fungicide exposure at first face of sheet | size of fungicide | fungicide diameter / resin layer thickness | type of additive (content in mass%) |
|---|---|---|---|---|---|---|---|---|---|---|---|
| | g/m² | nm | mass% | | | mass% | | | nm | | |
| Example 30 | 0.5 | 120 | 70.8 | present | zeolite-supported silver | 2.0 | solid | exposed | 1100 | 9.2 | urethane (18.9) |
| | | | | | | | | | | | polyfunctional acrylate (4.7) |
| | | | | | | | | | | | UV initiator (3.5) |
| Example 31 | 0.5 | 120 | 68.8 | present | zeolite-supported silver | 4.8 | solid | exposed | 1100 | 9.2 | urethane (18.4) |
| | | | | | | | | | | | polyfunctional acrylate (4.6) |
| | | | | | | | | | | | UV initiator (3.4) |
| Example 32 | 0.5 | 120 | 65.7 | present | zeolite-supported silver | 9.1 | solid | exposed | 1100 | 9.2 | urethane (17.5) |
| | | | | | | | | | | | polyfunctional acrylate (4.4) |
| | | | | | | | | | | | UV initiator (3.3) |
| Example 33* | 0.5 | 120 | 70.6 | present | carbamic acid based compound | 2.4 | oil-soluble liquid | exposed | - | - | urethane (18.8) |
| | | | | | | | | | | | polyfunctional acrylate (4.7) |
| | | | | | | | | | | | UV initiator (3.5) |
| Example 34* | 0.5 | 120 | 57.8 | present | carbamic acid based compound | 20.0 | oil-soluble liquid | exposed | - | - | urethane (15.4) |
| | | | | | | | | | | | polyfunctional acrylate (3.9) |
| | | | | | | | | | | | UV initiator (2.9) |
| Example 35* | 0.5 | 120 | 69.8 | present | organic nitrogen sulfur compound | 3.4 | water-soluble liquid | exposed | - | - | urethane (18.6) |
| | | | | | | | | | | | polyfunctional acrylate (4.7) |
| | | | | | | | | | | | UV initiator (3.5) |
| Example 36* | 0.5 | 120 | 57.8 | present | organic nitrogen sulfur compound | 20.0 | water-soluble liquid | exposed | - | - | urethane (15.4) |
| | | | | | | | | | | | polyfunctional acrylate (3.9) |
| | | | | | | | | | | | UV initiator (2.9) |
| Comparative example 2 | 0.5 | 120 | 72.3 | present | none | 0.0 | - | - | - | - | urethane (19.3) |
| | | | | | | | | | | | polyfunctional acrylate (4.8) |
| | | | | | | | | | | | UV initiator (3.6) |

**[Table 6]**

| | performance of heat exchange element sheet | | | | | | | | | |
|---|---|---|---|---|---|---|---|---|---|---|
| | before cleaning durability test | | | | | after cleaning durability test | | | | |
| | water vapor permeability | air permeability | growth state of fungi (after 2 weeks) | growth state of fungi (after 4 weeks) | antimicrobial activity | water vapor permeability | air permeability | growth state of fungi (after 2 weeks) | growth state of fungi (after 4 weeks) | antimicrobial activity |
| | g/m²/hr | S/100 ml | | | | g/m²/hr | S/100 ml | | | |
| Example 19 | 60 | > 40000 | 2 | 3 | > 4.9 | 60 | > 40000 | 2 | 3 | > 4.9 |
| Example 20 | 60 | > 40000 | 1 | 2 | > 4.9 | 60 | > 40000 | 1 | 2 | > 4.9 |
| Example 21 | 60 | > 40000 | 1 | 1 | > 4.9 | 60 | > 40000 | 1 | 1 | > 4.9 |
| Example 22 | 57 | > 40000 | 0 | 0 | > 4.9 | 57 | > 40000 | 0 | 0 | > 4.9 |
| Example 23 | 55 | > 40000 | 0 | 0 | > 4.9 | 55 | > 40000 | 0 | 0 | > 4.9 |
| Example 24 | 51 | > 40000 | 0 | 0 | > 4.9 | 51 | > 40000 | 0 | 0 | > 4.9 |
| Example 25 | 60 | > 40000 | 2 | 3 | > 4.9 | 60 | > 40000 | 2 | 3 | > 4.9 |
| Example 26 | 60 | > 40000 | 0 | 0 | > 4.9 | 60 | > 40000 | 0 | 0 | > 4.9 |
| Example 27 | 57 | > 40000 | 0 | 0 | > 4.9 | 57 | > 40000 | 0 | 0 | > 4.9 |
| Example 28 | 55 | > 40000 | 0 | 0 | > 4.9 | 55 | > 40000 | 0 | 0 | > 4.9 |
| Example 29 | 51 | > 40000 | 0 | 0 | > 4.9 | 51 | > 40000 | 0 | 0 | > 4.9 |
| Example 30 | 60 | > 40000 | 2 | 3 | 4.5 | 60 | > 40000 | 2 | 5 | 4 |
| Example 31 | 60 | > 40000 | 2 | 3 | > 4.9 | 60 | > 40000 | 2 | 4 | 4.5 |
| Example 32 | 60 | > 40000 | 1 | 2 | > 4.9 | 60 | > 40000 | 1 | 3 | > 4.9 |
| Example 33* | 60 | > 40000 | 2 | 5 | 0.5 | 60 | > 40000 | 3 | 5 | 0.3 |
| Example 34* | 60 | > 40000 | 2 | 4 | 1.3 | 62 | 12000 | 3 | 5 | 0.4 |
| Example 35* | 60 | > 40000 | 3 | 5 | 0.6 | 60 | > 40000 | 5 | 5 | 0.3 |
| Example 36* | 60 | > 40000 | 2 | 4 | 1.5 | 65 | 8000 | 5 | 5 | 0.3 |
| Comparative example 2 | 60 | > 40000 | 5 | 5 | 0.1 | 60 | > 40000 | 5 | 5 | 0.1 |

### (Example 37)

A paint composition for resin layer formation was prepared by the procedure described below. LuvitecK85 (registered trademark), Marukacide YP-DP (registered trademark), Hydran WLS-201 (registered trademark), Light Acrylate DPE6A (registered trademark), water, and ethanol were mixed at a mass ratio of 3.0:0.2:2.3:0.2:62.9:31.4.

Except for using a No. 3 bar coater, the same procedure as in Example 19 was carried out to produce a heat exchange element sheet having a resin layer containing 71.6 mass% of polyvinyl pyrrolidone and 1.0 mass% of a solid type fungicide.

Component features of the heat exchange element sheet are given in Table 7.

### (Example 38)

Except for using a No. 5 bar coater, the same procedure as in Example 37 was carried out to produce a heat exchange element sheet having a resin layer containing 71.6 mass% of polyvinyl pyrrolidone and 1.0 mass% of a solid type fungicide.

Component features of the heat exchange element sheet are given in Table 7.

### (Example 39)

Except for using a No. 9 bar coater, the same procedure as in Example 37 was carried out to produce a heat exchange element sheet having a resin layer containing 71.6 mass% of polyvinyl pyrrolidone and 1.0 mass% of a solid type fungicide.

Component features of the heat exchange element sheet are given in Table 7.

### (Example 40)

Except for using a No. 15 bar coater, the same procedure as in Example 37 was carried out to produce a heat exchange element sheet having a resin layer containing 71.6 mass% of polyvinyl pyrrolidone and 1.0 mass% of a solid type fungicide.

Component features of the heat exchange element sheet are given in Table 7.

### (Example 41)

Except for using a No. 20 bar coater, the same procedure as in Example 37 was carried out to produce a heat exchange element sheet having a resin layer containing 71.6 mass% of polyvinyl pyrrolidone and 1.0 mass% of a solid type fungicide.

Component features of the heat exchange element sheet are given in Table 7.

Evaluation results obtained from the heat exchange element sheets prepared in Examples 37 to 41 are shown in Table 8. All these exchange element sheets have a resin layer containing a solid type fungicide to realize a high fungus resistance.

The heat exchange element sheets prepared in Examples 37 and 38 suffered a larger deterioration in fungus resistance determined after the cleaning durability test than those prepared in Examples 39 to 41. Since the resin layers in the heat exchange element sheets prepared in Examples 37 and 38 were so small in thickness that the solid type fungicide and the resin layer had a small adhesion area. It is considered accordingly that the adhesion strength between the solid type fungicide and the resin layer was so small that the solid type fungicide came off significantly during the cleaning durability test, resulting in a lower fungus resistance.

The heat exchange element sheets prepared in Examples 40 and 41 were lower in fungus resistance before the cleaning durability test than those prepared in Examples 37 to 39. The resin layers in the heat exchange element sheets prepared in Examples 40 and 41 were so large in thickness that the solid type fungicide had a smaller exposed area at the first face of the heat exchange element sheet, and this led to a smaller amount of effective components supplied to the first face of the heat exchange element sheet to suppress the growth of fungi, resulting in a lower fungus resistance.

**[Table 7]**

| | area density of resin layer | thickness of resin layer | content of PVP etc. | presence or absence of crosslinked structure of PVP etc. | type of fungicide | content of fungicide | property of fungicide | fungicide exposure at first face of sheet | size of fungicide | fungicide diameter / resin layer thickness | type of additive (content in mass%) |
|---|---|---|---|---|---|---|---|---|---|---|---|
| | g/m² | nm | mass% | | | mass% | | | nm | | |
| Example 37 | 0.3 | 60 | 71.6 | present | zinc pyrithione | 1.0 | solid | exposed | 350 | 5.8 | urethane (19.1) |
| | | | | | | | | | | | polyfunctional acrylate (4.8) |
| | | | | | | | | | | | UV initiator (3.6) |
| Example 38 | 0.4 | 100 | 71.6 | present | zinc pyrithione | 1.0 | solid | exposed | 350 | 3.5 | urethane (19.1) |
| | | | | | | | | | | | polyfunctional acrylate (4.8) |
| | | | | | | | | | | | UV initiator (3.6) |
| Example 39 | 0.8 | 200 | 71.6 | present | zinc pyrithione | 1.0 | solid | exposed | 350 | 1.8 | urethane (19.1) |
| | | | | | | | | | | | polyfunctional acrylate (4.8) |
| | | | | | | | | | | | UV initiator (3.6) |
| Example 40 | 1.3 | 300 | 71.6 | present | zinc pyrithione | 1.0 | solid | exposed | 350 | 1.2 | urethane (19.1) |
| | | | | | | | | | | | polyfunctional acrylate (4.8) |
| | | | | | | | | | | | UV initiator (3.6) |
| Example 41 | 1.8 | 500 | 71.6 | present | zinc pyrithione | 1.0 | solid | not exposed | 350 | 0.7 | urethane (19.1) |
| | | | | | | | | | | | polyfunctional acrylate (4.8) |
| | | | | | | | | | | | UV initiator (3.6) |

**[Table 8]**

| | performance of heat exchange element sheet | | | | | | | | | |
|---|---|---|---|---|---|---|---|---|---|---|
| | before cleaning durability test | | | | | after cleaning durability test | | | | |
| | water vapor permeability | air permeability | growth state of fungi (after 2 weeks) | growth state of fungi (after 4 weeks) | antimicrobial activity | water vapor permeability | air permeability | growth state of fungi (after 2 weeks) | growth state of fungi (after 4 weeks) | antimicrobial activity |
| | g/m²/hr | S/100 ml | | | | g/m²/hr | S/100 ml | | | |
| Example 37 | 60 | > 40000 | 0 | 0 | > 4.9 | 60 | > 40000 | 2 | 3 | > 4.9 |
| Example 38 | 60 | > 40000 | 0 | 0 | > 4.9 | 60 | > 40000 | 1 | 2 | > 4.9 |
| Example 39 | 60 | > 40000 | 0 | 0 | > 4.9 | 60 | > 40000 | 0 | 0 | > 4.9 |
| Example 40 | 60 | > 40000 | 0 | 1 | > 4.9 | 60 | > 40000 | 0 | 1 | > 4.9 |
| Example 41 | 60 | > 40000 | 1 | 2 | > 4.9 | 60 | > 40000 | 1 | 2 | > 4.9 |

### EXPLANATION OF NUMERALS

101. heat exchange element sheet
102. porous base material
103. resin layer
104. solid type fungicide
105. first face

## Claims

1. A heat exchange element sheet (101) having a layered structure containing a porous base material (102) and a resin layer (103),
the heat exchange element sheet (101) having a first face (105) and a second face,
an outermost layer at the first face (105) of the heat exchange element sheet (101) being a resin layer (103),
the resin layer (103) containing polyvinyl pyrrolidone and/or a vinyl pyrrolidone copolymer,
the resin layer (103) containing a fungicide (104), wherein the fungicide (104) is a solid material in the form of particles, the heat exchange element sheet (101) being **characterised in that** the fungicide (104) particles have diameters of 10 nm or more and 10,000 nm or less, and wherein a ratio between the diameter of the fungicide (104) and a thickness of the resin layer (103) (diameter of fungicide / thickness of resin layer) is 0.5 to 10, wherein
the diameter of the fungicide (104) particles is determined from an image taken of a first face or cross section of the heat exchange element sheet (101) observed by SEM, an area of each solid fungicide (104) particle found in the image is measured by an image analysis technique, and a diameter of a perfect circle having the same area as the measured one is calculated, and an average is calculated to represent the diameter of the solid fungicide (104) particles, and
the thickness of the resin layer (103) is determined from a SEM cross section image or a TEM cross section image of the heat exchange element sheet (101), the thickness of the resin layer (103) being considered to be represented by a distance from a first surface of the heat exchange element sheet (101) having penetrated into the porous base material (102) to an interface between the resin layer (103) and the porous base material (102), and resin layer components existing in pores of the porous base material (102) are ignored in determining the thickness of the resin layer (103).

2. A heat exchange element sheet (101) as set forth in claim 1, wherein the fungicide (104) is exposed at the first face (105).

3. A heat exchange element sheet (101) as forth in any one of claims 1 to 2, wherein the fungicide (104) contains one or more selected from the group consisting of pyrithione based compounds, benzoimidazole based compounds, and silver based inorganic substances.

4. A heat exchange element sheet (101) as set forth in any one of claims 1 to 3, wherein the fungicide (104) accounts for 0.5 mass% or more and 30 mass% or less of the total mass of the resin layer (103) and has a weight of 0.0005 g/m² or more and 0.9 g/m² or less.

5. A heat exchange element sheet (101) as set forth in any one of claims 1 to 4, wherein the fungicide (104) particles have diameters of 10 nm or more and 6,000 nm or less.

6. A heat exchange element sheet (101) as set forth in any one of claims 1 to 5, wherein the ratio between the diameter of the fungicide (104) and the thickness of the resin layer (103) is 1 or more and 10 or less.

7. A heat exchange element sheet (101) as set forth in any one of claims 1 to 6, wherein the fungicide (104) has a particle shape with a ratio between the longest diameter of the fungicide particles / the shortest diameter of the fungicide particles of 5 or less.

8. A production method for a heat exchange element sheet (101) as set forth in any one of claims 1 to 7 comprising:
a step for coating either of the faces of the porous base material (102) with a coating liquid to form a coating film and a step for drying the coating film, which are carried out in this order,
the coating liquid containing polyvinyl pyrrolidone and/or a vinyl pyrrolidone copolymer, and
the coating liquid containing the fungicide (104).

9. A heat exchange element comprising a heat exchange element sheet (101) as set forth in any one of claims 1 to 7.

10. A heat exchanger comprising a heat exchange element as set forth in claim 9.

## Patentansprüche

1. Wärmetauscherelementblech (101), das eine Schichtstruktur aufweist, die ein poröses Basismaterial (102) und eine Harzschicht (103) enthält,
wobei das Wärmetauscherelementblech (101) eine erste Fläche (105) und eine zweite Fläche aufweist, wobei eine äußerste Schicht auf der ersten Fläche (105) des Wärmetauscherelementblechs (101) eine Harzschicht (103) ist,
wobei die Harzschicht (103) ein Polyvinylpyrrolidon- und/oder ein Vinylpyrrolidon-Copolymer enthält,
wobei die Harzschicht (103) ein Fungizid (104) enthält, wobei das Fungizid (104) ein festes Material in Form von Partikeln ist, wobei das Wärmetauscherelementblech (101) **dadurch gekennzeichnet ist, dass** die Partikel des Fungizids (104) Durchmesser von 10 nm oder mehr und 10.000 nm oder weniger aufweisen, und wobei ein Verhältnis zwischen dem Durchmesser des Fungizids (104) und einer Dicke der Harzschicht (103) (Durchmesser des Fungizids/Dicke der Harzschicht) 0,5 bis 10 beträgt, wobei:
der Durchmesser der Partikel des Fungizids (104) ausgehend von einem Bild bestimmt wird, das von einer ersten Fläche oder einem Querschnitt des Wärmetauscherelementblechs (101), aufgenommen durch SEM, aufgenommen wird, wobei eine Fläche jedes festen Partikels des Fungizids (104), das in dem Bild gefunden wird, durch eine Bildanalysetechnik gemessen wird und ein Durchmesser eines perfekten Kreises, der dieselbe Fläche aufweist wie die gemessene, berechnet wird und ein Mittelwert berechnet wird, um den Durchmesser der festen Partikel des Fungizids (104) darzustellen, und
die Dicke der Harzschicht (103) ausgehend von einem SEM-Querschnittsbild oder einem TEM-Querschnittsbild des Wärmetauscherelementblechs (101) bestimmt wird, wobei die Dicke der Harzschicht (103) als eine betrachtet wird, die durch einen Abstand von einer ersten Oberfläche des Wärmetauscherelementblechs (101), die in das poröse Basismaterial (102) eingedrungen ist, bis zu einer Grenzfläche zwischen der Harzschicht (103) und dem porösen Basismaterial (102) dargestellt ist, und wobei Harzschichtkomponenten, die in Poren des porösen Basismaterials (102) vorhanden sind, beim Bestimmen der Dicke der Harzschicht (103) ignoriert werden.

2. Wärmetauscherelementblech (101) nach Anspruch 1, wobei das Fungizid (104) auf der ersten Fläche (105) freigelegt ist.

3. Wärmetauscherelementblech (101) nach einem der Ansprüche 1 bis 2, wobei das Fungizid (104) eines oder mehrere enthält, die aus der aus Verbindungen auf Pyrithion-Basis, Verbindungen auf Benzoimidazol-Basis und anorganischen Substanzen auf Silber-Basis bestehenden Gruppe ausgewählt sind.

4. Wärmetauscherelementblech (101) nach einem der Ansprüche 1 bis 3, wobei das Fungizid (104) 0,5 Massen-% oder mehr und 30 Massen-% oder weniger der Gesamtmasse der Harzschicht (103) ausmacht und ein Gewicht von 0,0005 g/m² oder mehr und 0,9 g/m² oder weniger aufweist.

5. Wärmetauscherelementblech (101) nach einem der Ansprüche 1 bis 4, wobei die Partikel des Fungizids (104) Durchmesser von 10 nm oder mehr und 6.000 nm oder weniger aufweisen.

6. Wärmetauscherelementblech (101) nach einem der Ansprüche 1 bis 5, wobei das Verhältnis zwischen dem Durchmesser des Fungizids (104) und der Dicke der Harzschicht (103) 1 oder mehr und 10 oder weniger beträgt.

7. Wärmetauscherelementblech (101) einem der Ansprüche 1 bis 6, wobei das Fungizid (104) eine Partikelform mit einem Verhältnis zwischen dem längsten Durchmesser der Fungizidpartikel/dem kürzesten Durchmesser der Fungizidpartikel von 5 oder weniger aufweist.

8. Herstellungsverfahren für ein Wärmetauscherelementblech (101), wie in einem der Ansprüche 1 bis 7 dargelegt, umfassend:
einen Schritt des Beschichtens einer der beiden Flächen des porösen Basismaterials (102) mit einer Beschichtungsflüssigkeit, um einen Beschichtungsfilm zu bilden, und einen Schritt des Trocknens des Beschichtungsfilms, die in dieser Reihenfolge durchgeführt werden,
wobei die Beschichtungsflüssigkeit ein Polyvinylpyrrolidon- und/oder ein Vinylpyrrolidon-Copolymer enthält und
die Beschichtungsflüssigkeit das Fungizid (104) enthält.

9. Wärmetauscherelement, umfassend ein Wärmetauscherelementblech (101) nach einem der Ansprüche 1 bis 7.

10. Wärmetauscher, umfassend ein Wärmetauscherelement nach Anspruch 9.

## Revendications

1. Feuille d'élément d'échange de chaleur (101) présentant une structure stratifiée contenant un matériau de base poreux (102) et une couche de résine (103),
la feuille d'élément d'échange de chaleur (101) présentant une première face (105) et une seconde face, une couche la plus externe au niveau de la première face (105) de la feuille d'élément d'échange de chaleur (101) étant une couche de résine (103),
la couche de résine (103) contenant de la polyvinylpyrrolidone et/ou un copolymère de vinylpyrrolidone,
la couche de résine (103) contenant un fongicide (104), dans laquelle le fongicide (104) est un matériau solide sous la forme de particules, la feuille d'élément d'échange de chaleur (101) étant **caractérisée en ce que** les particules du fongicide (104) présentent des diamètres de 10 nm ou plus et de 10 000 nm ou moins, et dans laquelle un rapport entre le diamètre du fongicide (104) et une épaisseur de la couche de résine (103) (diamètre du fongicide / épaisseur de la couche de résine) est de 0,5 à 10, dans laquelle
le diamètre des particules du fongicide (104) est déterminé à partir d'une image prise d'une première face ou section transversale de la feuille d'élément d'échange de chaleur (101) observée par SEM, une aire de chaque particule du fongicide solide (104) trouvée dans l'image est mesurée par une technique d'analyse d'image, et un diamètre d'un cercle parfait présentant la même aire que celle mesurée est calculé, et une moyenne est calculée pour représenter le diamètre des particules du fongicide solide (104), et
l'épaisseur de la couche de résine (103) est déterminée à partir d'une image de section transversale de SEM ou d'une image de section transversale de TEM de la feuille d'élément d'échange de chaleur (101), l'épaisseur de la couche de résine (103) étant considérée comme représentée par une distance entre une première surface de la feuille d'élément d'échange de chaleur (101) ayant pénétré dans le matériau de base poreux (102) et une interface entre la couche de résine (103) et le matériau de base poreux (102), et des composants de la couche de résine existant dans des pores du matériau de base poreux (102) sont ignorés lors de la détermination de l'épaisseur de la couche de résine (103).

2. Feuille d'élément d'échange de chaleur (101) selon la revendication 1, dans laquelle le fongicide (104) est exposé au niveau de la première face (105).

3. Feuille d'élément d'échange de chaleur (101) selon l'une quelconque des revendications 1 à 2, dans laquelle le fongicide (104) contient un ou plusieurs composés choisis dans le groupe constitué de composés à base de pyrithione, de composés à base de benzoimidazole et de substances inorganiques à base d'argent.

4. Feuille d'élément d'échange de chaleur (101) selon l'une quelconque des revendications 1 à 3, dans laquelle le fongicide (104) représente 0,5 % en masse ou plus et 30 % en masse ou moins de la masse totale de la couche de résine (103) et présente un poids de 0,0005 g/m² ou plus et de 0,9 g/m² ou moins.

5. Feuille d'élément d'échange de chaleur (101) selon l'une quelconque des revendications 1 à 4, dans laquelle les particules du fongicide (104) présentent des diamètres de 10 nm ou plus et de 6 000 nm ou moins.

6. Feuille d'élément d'échange de chaleur (101) selon l'une quelconque des revendications 1 à 5, dans laquelle le rapport entre le diamètre du fongicide (104) et l'épaisseur de la couche de résine (103) est de 1 ou plus et de 10 ou moins.

7. Feuille d'élément d'échange de chaleur (101) selon l'une quelconque des revendications 1 à 6, dans laquelle le fongicide (104) présente une forme de particule avec un rapport entre le diamètre le plus long des particules de fongicide/ le diamètre le plus court des particules de fongicide de 5 ou moins.

8. Procédé de production d'une feuille d'élément d'échange de chaleur (101) selon l'une quelconque des revendications 1 à 7, comprenant :
une étape de revêtement de l'une des faces du matériau de base poreux (102) avec un liquide de revêtement pour former un film de revêtement et une étape de séchage du film de revêtement, qui sont effectuées dans cet ordre,
l'application en revêtement d'un liquide contenant de la polyvinylpyrrolidone et/ou d'un copolymère de vinylpyrrolidone, et
l'application en revêtement d'un liquide contenant le fongicide (104).

9. Élément d'échange de chaleur comprenant une feuille d'élément d'échange de chaleur (101) selon l'une quelconque des revendications 1 à 7.

10. Échangeur de chaleur comprenant un élément d'échange de chaleur selon la revendication **9.**
